(19) Europäisches Patentamt
European Patent Office
Office européen des brevets

(11) EP 4 056 663 A2

(12) EUROPEAN PATENT APPLICATION
published in accordance with Art. 153(4) EPC

(43) Date of publication:
**14.09.2022 Bulletin 2022/37**

(21) Application number: **20885840.7**

(22) Date of filing: **20.10.2020**

(51) International Patent Classification (IPC):
***C09K 5/20*** *(2006.01)* ***C09B 47/08*** *(2006.01)*
***C23F 11/14*** *(2006.01)*

(52) Cooperative Patent Classification (CPC):
**C09K 5/20; C23F 11/14**

(86) International application number:
**PCT/KR2020/014357**

(87) International publication number:
**WO 2021/091123 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.11.2019 KR 20190139760**

(71) Applicant: **KD Finechem Co., Ltd.**
**Saha-gu**
**Busan 49432 (KR)**

(72) Inventors:
- **PARK, Jae Yoon**
  **Seoul 06288 (KR)**
- **PARK, Hyun Jin**
  **Seongnam-si, Gyeonggi-do 13455 (KR)**
- **LEE, Hong Ki**
  **Busan 46765 (KR)**
- **KIM, Ja Won**
  **Busan 47610 (KR)**

(74) Representative: **Plougmann Vingtoft a/s**
**Strandvejen 70**
**2900 Hellerup (DK)**

# (54) COLORANT FOR HEAT TRANSFER FLUID, AND COMPOSITION COMPRISING SAME

(57) The present invention relates to a colorant for a heat transfer fluid and a composition comprising same.

【Fig 1a】

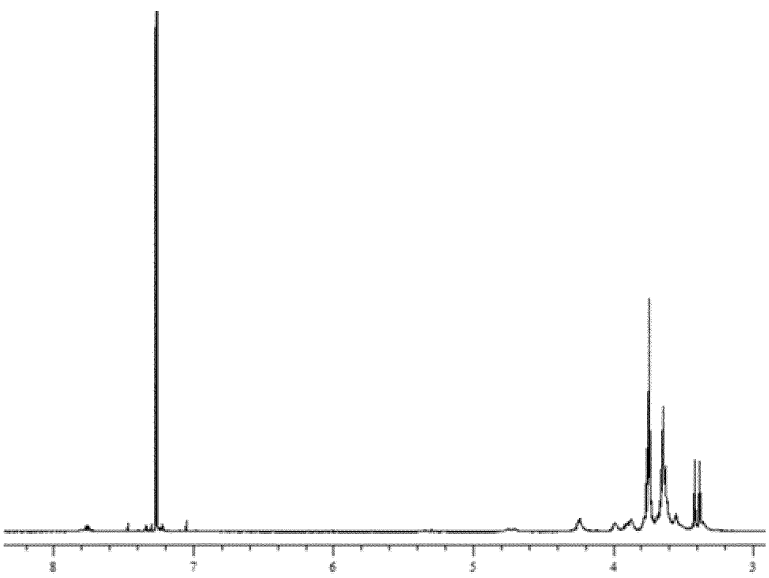




Processed by Luminess, 75001 PARIS (FR)

(Cont. next page)

【Fig 1b】

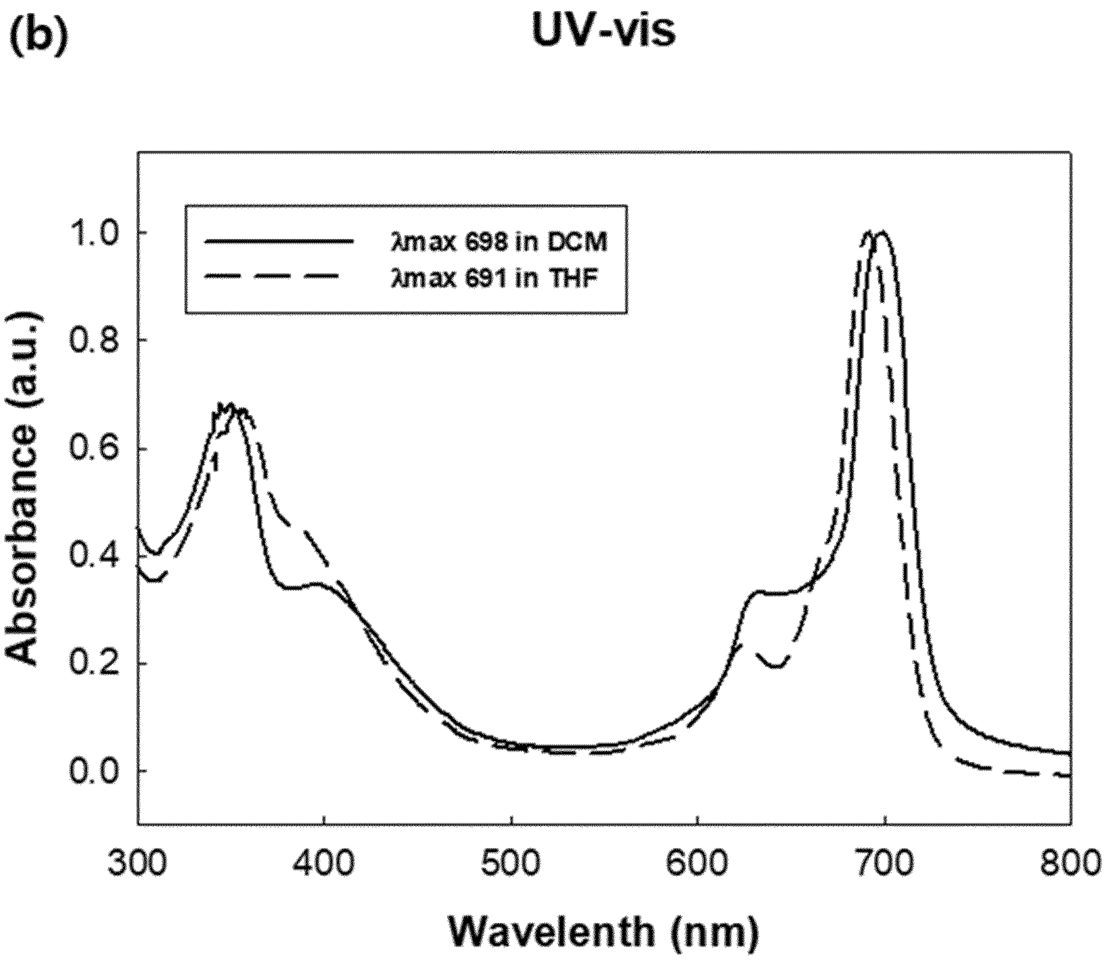
(b)
UV-vis
λmax 698 in DCM
λmax 691 in THF
Absorbance (a.u.)
1.0
0.8
0.6
0.4
0.2
0.0
300
400
500
600
700
800
Wavelenth (nm)

## Description

### Technical Field

This application claims priority to and the benefit of Korean Application Number 10-2019-0139760, filed in the Korean Intellectual Property Office on November 04, 2019, the entire content of which is incorporated herein by reference.
The present disclosure relates to a colorant for heat transfer fluid and a composition comprising same.

### Background Art

A fuel cell is an electrochemical cell that takes advantage of the electrochemical reaction in which protons generated by oxidation reactions at the anode are reduced into water at the cathode, with the concomitant generation of electricity. To yield a high voltage, fuel cells are usually combined in series to form a cell stack. In this design, there is electric resistance within individual cells and a large quantity of heat is generated as the resistance converts some energy into heat energy, but not into electric energy.
Hence, it is necessary to control the heat of the exothermic reaction conducted during the electrochemical reaction in order to achieve a desired level of current density without degradation of fuel cell components. In this regard, an effective cooling system should be required for operating the cells.
Deionized water (DI water), which has been used as cooling water for initial fuel cell systems, is superb in terms of electric insulation and cooling performance, but suffers from the disadvantage of being frozen at 0°C or has the problem of rapidly decreasing in electric insulation because it is apt to be easily contaminated.
For freeze prevention, deionized water is mixed with a material such as calcium chloride, magnesium chloride, ethylene glycol, etc., to increase the boiling point and achieve freezing-point depression. Such a mixed solution is referred to as antifreeze. As a rule, an antifreeze contains a colorant to make it easy to check the concentration with the naked eye and to prevent confusion with water in industrial sites. Antifreezes for fuel cells employ, for the most part, acid dyes and direct dyes. However, such acid dyes and direct dyes are disadvantageous with respect to low color development and poor electrochemical stability.
Consisting of many individual fuel cells combined with each other, a fuel cell stack has a high voltage output. Hence, an antifreeze is required to have very low conductivity so as to prevent and minimize a risk of electrical shocks and to minimize the reduction of current shunts and system efficiency.
However, conventional dyes and colorants used in coolants for fuel cells are generally highly conductive ionic species and as such, are unsuitable for use in an antifreeze requiring low conductivity for fuel cells.
There is therefore a need for research and development of a novel antifreeze that is electrochemically stable and has low electrical conductivity.

## Disclosure of Invention

### Technical Problem

An aspect of the present disclosure is to provide a colorant for heat transfer fluids, which is physically and chemically stable and exhibits excellent color intensity.
Another of the present disclosure is to provide an antifreeze composition comprising the colorant.

### Solution to Problem

The present disclosure is concerned with a colorant for heat transfer fluids and a composition comprising same.
Below, a detailed description will be given of the present disclosure.
An aspect of the present disclosure pertains to a colorant for heat transfer fluids, which has the structure of the following Chemical Formula 1:

[Chemical Formula 1]

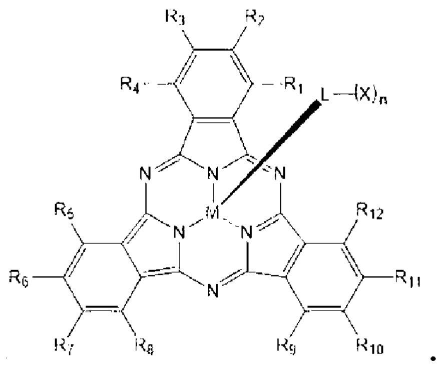

In the present disclosure, M may be a metal or a metalloid.

In the present disclosure, the metal or metalloid may be boron (B), silicon (Si), aluminum (Al), gallium (Ga), indium (In), or titanium (Ti), and, for example, boron, but is not limited thereto.

Silicon and boron are metalloid elements. Although being not metals, metalloids have the same crystal structures as in metals and exhibit properties similar to those of metals.

In the present disclosure, L may be $-(CH_2)m-$, -COO-, -CO-, -MH-, $-SO_2-$, or $-SO_2NH-$, but is not limited thereto.

In the present disclosure, m may be an integer, for example, an integer of 0 or greater and preferably an integer of 0 to 3, but is not limited thereto. As the moiety $-(CH_2)-$ functions as a linker, it may be a bond (in this case, m=0). When the alkyl group is too long, such as m>3, a dye drastically decreases in solubility in the antifreeze (water soluble) and is not suitable as a colorant.

In the present disclosure, X may be a hydrophilic polymer and may include, for example, polyethylene glycol, polyvinyl alcohol, polyvinylpyrrolidone, or a copolymer thereof, but is not limited thereto.

In the present disclosure, n is an integer of 1 or greater, for example, 1 or 2, but with no limitations thereto, and the number of the ligand may be one or two depending on the type of M.

In the present disclosure, the hydrophilic polymer may have a number average molecular weight of 150 to 20,000, 200 to 20,000, 250 to 20,000, 300 to 20,000, 350 to 20, 000, 150 to 15,000, 200 to 15,000, 250 to 15,000, 300 to 15,000, 350 to 15,000, 150 to 10,000, 200 to 10,000, 250 to 10,000, 300 to 10,000, 350 to 10,000, 150 to 5,000, 200 to 5,000, 250 to 5,000, 300 to 5,000, 350 to 5,000, 150 to 3,000, 200 to 3,000, 250 to 3,000, 300 to 3,000, 350 to 3,000, 150 to 1,000, 200 to 1,000, 250 to 1,000, 300 to 1,000, 350 to 1,000, 150 to 500, 200 to 500, 250 to 500, 300 to 500, and 350 to 500, for example, 400. When the hydrophilic polymer has a molecular weight less than 150, the dissolubility and compatibility with solvents in antifreezes was restrictive due to its too short chain. For a hydrophilic polymer with a molecular weight of 20,000 or greater, the condensation is hampered due to its too long chain during the synthesis of the colorant, thereby decreasing reaction yield and significantly reducing the intensity of color development.

In the present disclosure, Ra to Rp may each be independently a hydrogen atom, a halogen atom, a carboxyl, a sulfonic acid, an amide, an ester, an acetyl, a siloxane, an alkyl of $C_1$ to $C_{10}$, an alkylene of $C_1$ to $C_{10}$, an alkoxy of $C_1$ to $C_{10}$, an oxyalkylene of $C_1$ to $C_{10}$, an fluoroalkyl of $C_1$ to $C_{10}$, an arylalkyl of $C_4$ to $C_{20}$, or a derivative thereof.

In the present disclosure, four or eight of the peripheral moieties accounted for by Ra to Rp in the structure of Chemical Formula 1 are substituted to form a symmetric structure or some of the peripheral moieties are selectively substituted to form an asymmetric structure.

In the present disclosure, the structure of Chemical Formula 1 includes unsaturated bonds, functioning as a chromophore in which pi ($\pi$) electrons absorb energy and are excited, with the concomitant development of a color. The peripheral substituents are attached to the chromophore, serving as an auxochrome that alters the color tone of the organic compound.

In the present disclosure, the colorant having the structure of Chemical Formula 1 may express red colors and change in color depending on kinds and numbers of the peripheral substituents.

In a specific embodiment of the present disclosure, when $R_2$, $R_6$, and $R_{10}$ are each the fluoroalkyl $-C_6F_{13}$ in Chemical Formula 1, with each of the remaining peripheral substituents being a hydrogen atom, the compound has the structure of the following Chemical Formula 1-1, appearing pink:

[Chemical Formula 1-1]

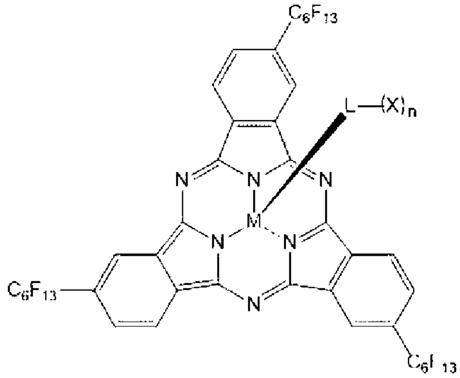

Another aspect of the present disclosure is concerned with a colorant for heat transfer fluids, which has the structure of the following Chemical Formula 2:

[Chemical Formula 2]

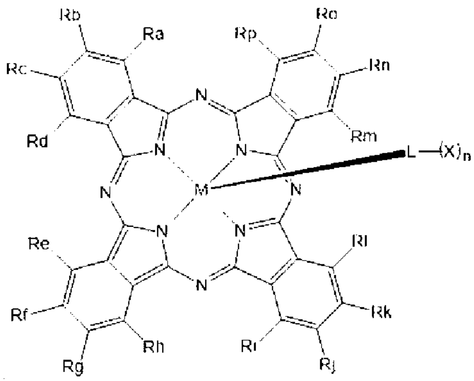

In the present disclosure, M may be a metal or a metalloid.

In the present disclosure, the metal or metalloid may be silicon (Si), aluminum (Al), gallium (Ga), indium (In), titanium (Ti), tin (Sn), or ruthenium (Ru) and, for example, silicon or gallium, but is not limited thereto.

Silicon is a metalloid element. Although being not metals, silicon has the same crystal structure as in a metal and exhibit properties similar to those of metals.

In the present disclosure, L may be $-(CH_2)m-$, -COO-, -CO-, -MH-, $-SO_2-$, or $-SO_2NH-$, but is not limited thereto.

In the present disclosure, m may be an integer, for example, an integer of 0 or greater and preferably an integer of 0 to 3, but is not limited thereto. As the moiety $-(CH_2)-$ functions as a linker, it may be a bond (in this case, m=0). When the alkyl group is too long, such as m>3, a dye drastically decreases in solubility in the antifreeze (water soluble) and is not suitable as a colorant.

In the present disclosure, X may be a hydrophilic polymer and may include, for example, polyethylene glycol, polyvinyl alcohol, polyvinylpyrrolidone, or a copolymer thereof, but is not limited thereto.

In the present disclosure, n is an integer of 1 or greater, for example, 1 or 2, but with no limitations thereto, and the number of the ligand may be one or two depending on the type of M.

In the present disclosure, the hydrophilic polymer may have a number average molecular weight of 150 to 20,000, 200 to 20,000, 250 to 20,000, 300 to 20,000, 350 to 20,000, 150 to 15,000, 200 to 15,000, 250 to 15,000, 300 to 15,000, 350 to 15,000, 150 to 10,000, 200 to 10,000, 250 to 10,000, 300 to 10,000, 350 to 10,000, 150 to 5,000, 200 to 5,000, 250 to 5,000, 300 to 5,000, 350 to 5,000, 150 to 3,000, 200 to 3,000, 250 to 3,000, 300 to 3,000, 350 to 3,000, 150 to 1,000, 200 to 1,000, 250 to 1,000, 300 to 1,000, 350 to 1,000, 150 to 500, 200 to 500, 250 to 500, 300 to 500, 350 to 500, for example, 400. When the hydrophilic polymer has a molecular weight less than 150, the dissolubility and compatibility with solvents in antifreezes was restrictive due to its too short chain. For a hydrophilic polymer with a molecular weight of 20,000 or greater, the condensation is hampered due to its too long chain during the synthesis of the colorant, thereby decreasing reaction yield and significantly reducing the intensity of color development.

In the present disclosure, Ra to Rp may each be independently a hydrogen atom, a halogen atom, a carboxyl,

a sulfonic acid, an amide, an ester, an acetyl, a siloxane, an alkyl of $C_1$ to $C_{10}$, an alkylene of $C_1$ to $C_{10}$, an alkoxy of $C_1$ to $C_{10}$, an oxyalkylene of $C_1$ to $C_{10}$, an fluoroalkyl of $C_1$ to $C_{10}$, an arylalkyl of $C_4$ to $C_{20}$, or a derivative thereof.

In the present disclosure, four or eight of the peripheral moieties accounted for by Ra to Rp in the structure of Chemical Formula 1 are substituted to form a symmetric structure or some of the peripheral moieties are selectively substituted to form an asymmetric structure.

In the present disclosure, the structure of Chemical Formula 2 includes unsaturated bonds, functioning as a chromophore in which pi ($\pi$) electrons absorb energy and are excited, with the concomitant development of a color. The peripheral substituents are attached to the chromophore, serving as an auxochrome that alters the color tone of the organic compound.

In the present disclosure, the colorant having the structure of Chemical Formula 2 may express blue to blue green colors and change in color depending on kinds and numbers of the peripheral substituents.

In a specific embodiment of the present disclosure, when Rb, Rf, Rj, and Rn are each t-butyl (tert-butyl) in Chemical Formula 2, with each of the remaining peripheral substituents being a hydrogen atom, the compound has the structure of the following Chemical Formula 2-1, appearing blue green:

[Chemical Formula 2-1]

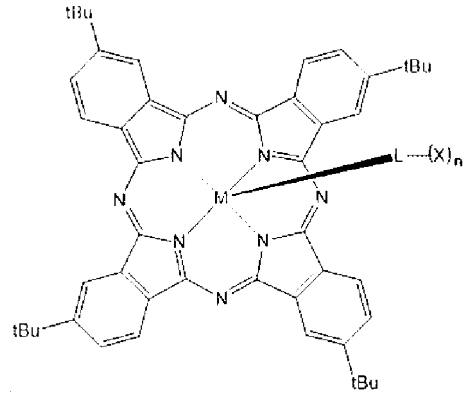

In another specific embodiment of the present disclosure, when M is silicon (Si) with two substituents thereon and the peripheral substituents are all hydrogen, the compound of Chemical Formula 2 has the structure of the following Chemical Formula 2-2, appearing blue:

[Chemical Formula 2-2]

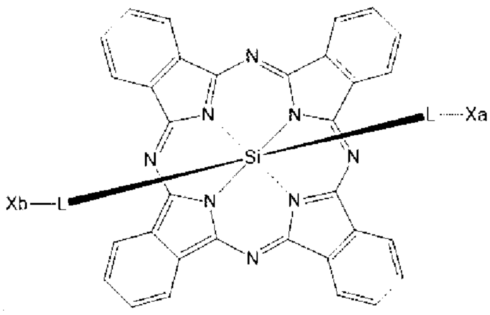

In Chemical Formula 2-2, Xa and Xb may each be independently a hydrophilic polymer and may include, for example, polyethylene glycol, polyvinyl alcohol, polyvinylpyrrolidone, or a copolymer of two or more thereof, but is not limited thereto.

In a further specific embodiment of the present disclosure, when the peripheral substituents are triethylene glycol (TEG), the compound of Chemical Formula 2 has the structure of the following Chemical Formula 2-3, appearing blue green:

[Chemical Formula 2-3]

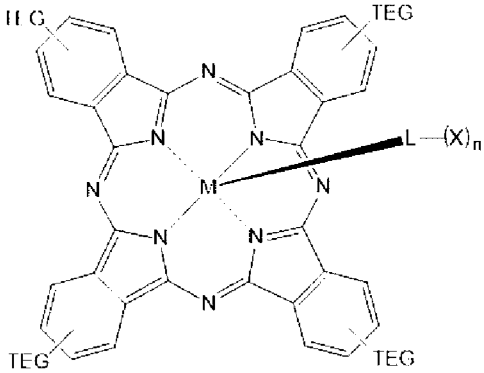

In the foregoing, the colorant of the present disclosure was elucidated, but with no limitations thereto. For example, phthalonitrile derivatives are first synthesized as starting materials and then reacted at controlled ratios to afford colorants having various structures and properties according to the present disclosure.

Being structured to have a hydrophilic molecule as a substituent to the molecular axis thereof, the colorant of the present disclosure is superb in terms of chemical and thermal stability. Particularly, the colorant is highly compatible with components of the antifreeze composition and exhibits excellent solubility in the antifreeze.

The colorant of the present disclosure is thermally stable at 250°C or lower, with a weight loss of 10% or less.

In the present disclosure, the colorant may have a solubility of 1.0 g/L or more in an antifreeze composition. At the solubility, the colorant exhibits sufficient chromaticity.

In the present disclosure, the antifreeze composition may be a glycol-based antifreeze composition, for example, an ethylene glycol-based composition, but is not limited thereto.

Due to excellent solubility in an antifreeze composition, the colorant of the present disclosure is well miscible therein. In addition, the colorant has excellent chromaticity in addition to physical and chemical stability and as such, can exhibit excellent color properties in an antifreeze composition even when used at a small amount. Accordingly, the colorant of the present disclosure is particularly suitable for use in an antifreeze composition and can exhibit excellent properties.

In addition, the colorant of the present disclosure is superb in terms of electric insulation. Thus, , when applied to a fuel cell, the antifreeze composition comprising the colorant of the present invention guarantees very low electric conductivity and shows poor pollution to the ion exchange resin of the fuel cell.

Another aspect of the present disclosure is concerned with an antifreeze composition comprising a colorant, a glycol compound, and water.

In the present disclosure, the colorant may be a colorant having the structure of the following Chemical Formula 1 and/or a colorant having the structure of the following Chemical Formula 2:

[Chemical Formula 1]

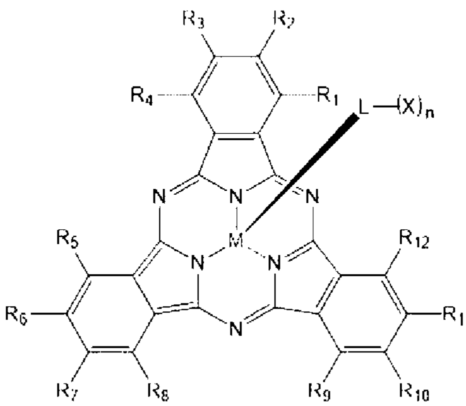

[Chemical Formula 2]

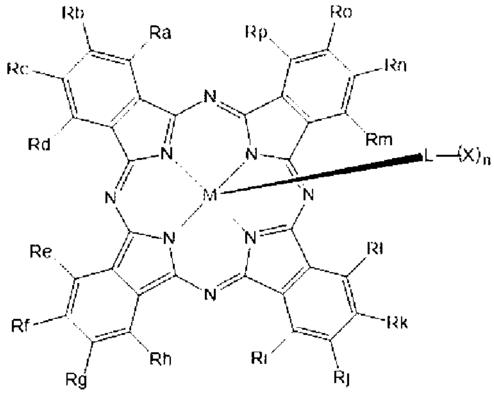

Chemical Formulas 1 and 2 are as described in the foregoing.

According to the present disclosure, the content of the colorant having the structure of Chemical Formula 1 and/or the colorant having the structure of Chemical Formula 2 in an antifreeze composition may range 0.001 to 10.000 % by weight, 0.001 to 9.000 % by weight, 0.001 to 8.000 % by weight, 0.001 to 7.000 % by weight, 0.001 to 6.000 % by weight, 0.001 to 5.000 % by weight, 0.001 to 4.000 % by weight, 0.001 to 3.000 % by weight, 0.001 to 2.000 % by weight, 0.001 to 1.000 % by weight, 0.001 to 0.100 % by weight, 0.001 to 0.010 % by weight, for example, 0.002 to 0.008 % by weight, based on the total weight of the antifreeze composition.

So long as it is known in the art, any glycol compound may be available in the present disclosure. For example, the glycol compound may be at least one selected from the group consisting of ethylene glycol, diethylene glycol, triethylene glycol, propylene glycol, dipropylene glycol, butylene glycol, polyalkylene glycol, and glycol ether, for example, ethylene glycol, but with no limitations thereto.

According to the present disclosure, the glycol compound may be contained in an amount of 30 to 70 % by weight, 30 to 65 % by weight, 30 to 60 % by weight, 30 to 55 % by weight, 35 to 70 % by weight, 35 to 65 % by weight, 35 to 60 % by weight, 35 to 55 % by weight, 40 to 70 % by weight, 40 to 65 % by weight, 40 to 60 % by weight, 40 to 55 % by weight, 45 to 70 % by weight, 45 to 65 % by weight, 45 to 60 % by weight, or 45 to 55 % by weight, for example, 45 to 54 % by weight, based on the total weight of the composition.

In the present disclosure, the water may be deionized water, pure distilled water, or double distilled water, but is not limited thereto.

According to the present disclosure, the water may be contained in an amount of 30 to 70 % by weight, 30 to 65 % by weight, 30 to 60 % by weight, 30 to 55 % by weight, 35 to 70 % by weight, 35 to 65 % by weight, 35 to 60 % by weight, 35 to 55 % by weight, 40 to 70 % by weight, 40 to 65 % by weight, 40 to 60 % by weight, 40 to 55 % by weight, 45 to 70 % by weight, 45 to 65 % by weight, 45 to 60 % by weight, or 45 to 55 % by weight, for example, 45 to 54 % by weight, based on the total weight of the composition.

According to the present disclosure, the antifreeze composition may further comprise an antifoaming agent.

According to the present disclosure, the antifoaming agent may be contained in an amount of 0.005 to 0.100 % by weight, 0.005 to 0.050 % by weight, 0.005 to 0.010 % by weight, 0.005 to 0.008 % by weight, 0.004 to 0.100 % by weight, 0.004 to 0.050 % by weight, 0.004 to 0.010 % by weight, 0.004 to 0.008 % by weight, 0.003 to 0.100 % by weight, 0.003 to 0.050 % by weight, 0.003 to 0.010 % by weight, 0.003 to 0.008 % by weight, 0.002 to 0.100 % by weight, 0.002 to 0.050 % by weight, 0.002 to 0.010 % by weight, or 0.002 to 0.008 % by weight, for example, 0.002 to 0.008 % by weight, based on the total weight of the composition.

According to the present disclosure, the antifreeze composition may further comprise a pH adjuster.

According to the present disclosure, the pH adjuster may be contained in an amount of 0.0005 to 0.1 % by weight, 0.0005 to 0.01 % by weight, 0.0005 to 0.009 % by weight, 0.0005 to 0.008 % by weight, 0.0005 to 0.007 % by weight, 0.0005 to 0.006 % by weight, for example, 0.0005 to 0.005 % by weight, based on the total weight of the composition.

According to the present disclosure, the pH adjuster may be an amine-based compound.

In the present disclosure, the amine-based compound may be at least one selected from the group consisting alkanolamine, alkylamine, and a cyclic amine.

In the present disclosure, examples of the alkanolamine include, but are not limited to, monomethanolamine, dimethanolamine, trimethanolamine, monoethanolamine, diethanolamine, triethanolamine, monopropanolamine, dipropanolamine, tripropanolamine, monoisopropanolamine, diisopropanolamine, and triisopropanolamine.

In the present disclosure, examples of the alkylamine include, but are not limited to, dibutyl amine, tributyl amine, dicyclohexyl amine, cyclohexyl amine and salt thereof, piperazine, n-propylamine, isopropylamine, n-butylamine,

isobutylamine, sec-butylamine, tert-butylamine, n-pentylamine, n-hexylamine, n-heptylamine, n-octylamine, 2-ethylhexylamine, n-nonylamine, n-decylamine, 2-propylheptyl amine, n-undecylamine, n-dodecylamine, n-tridecylamine, isotridecylamine, n-tetradecylamine, n-pentadecylamine, n-hexadecylamine, n-heptadecylamine, n-octadecylamine, n-nonadecylamine, n-eicosyl-amine, di-(n-hexyl)amine, di-(n-heptyl)amine, di-(n-octyl)amine, di-(2-ethylhexyl)amine, di-(n-nonyl)amine, di-(n-decyl)amine, di-(2-propylheptyl)amine, di-(n-undecyl)amine, di-(n-dodecyl)amine, di-(n-tridecyl)amine, di-(isotridecyl)amine, di-(n-tetradecyl)amine, di-(n-pentadecyl)amine, di-(n-hexadecyl)amine, di-(n-heptadecyl)amine, di-(n-octadecyl)-amine, di-(n-nonadecyl)amine, di-(n-eicosyl)amine, n-hexylmethylamine, n-heptyl-methylamine, n-octylmethylamine, (2-ethylhexyl)methylamine, n-nonylmethylamine, n-decylmethylamine, (2-propylheptyl)methylamine, n-undecylmethylamine, n-dodecyl-methylamine, n-tridecylmethylamine, isotridecylmethylamine, n-tetradecylmethylamine, n-pentadecylmethylamine, n-hexadecylmethylamine, n-heptadecylmethylamine, n-octa-decylmethylamine, n-nonadecylmethylamine, n-eicosylmethylamine, di-(n-nonyl)amine, di-(n-decyl)amine, di-(2-propylheptyl)amine, di-(n-undecyl)amine, di-(n-dodecyl)amine, di-(n-tridecyl)amine, di-(isotridecyl)amine, di-(n-tetradecyl)amine, di-(n-pentadecyl)amine, di-(n-hexadecyl)amine, di-(n-heptadecyl)amine, di-(n-octadecyl)-amine, di-(n-nonadecyl)amine, di-(n-eicosyl)amine, n-hexylmethylamine, n-heptyl-methylamine, n-octylmethylamine, (2-ethylhexyl)methylamine, n-nonylmethylamine, n-decylmethylamine, (2-propylheptyl)methylamine, n-undecylmethylamine, n-dodecylmethylamine, n-tridecylmethylamine, isotridecylmethylamine, n-tetradecylmethylamine, n-pentadecylmethylamine, n-hexadecylmethylamine, n-heptadecylmethylamine, n-octa-decylmethylamine, n-nonadecylmethylamine, and n-eicosylmethylamine.

In the present disclosure, the cyclic amine may be morpholine, but is not limited thereto.

In an embodiment of the present disclosure, the amine-based compound may be triethanolamine.

In another embodiment of the present disclosure, the trimethanolamine may be contained in an amount of 0.0005 to 0.1 % by weight, 0.0005 to 0.01 % by weight, 0.0005 to 0.009 % by weight, 0.0005 to 0.008 % by weight, 0.0005 to 0.007 % by weight, or 0.0005 to 0.006 % by weight, for example, 0.0005 to 0.005 % by weight, based on the total weight of the composition.

In the present disclosure, the antifreeze composition may further comprise a metal corrosion inhibitor.

In the present disclosure, the metal corrosion inhibitor may be contained in an amount of 0.0001 to 11.0 % by weight, 0.0001 to 10.0 % by weight, 0.0001 to 9.0 % by weight, 0.0001 to 8.0 % by weight, 0.0001 to 7.0 % by weight, 0.0001 to 6.0 % by weight, 0.0001 to 5.0 % by weight, 0.0001 to 4.0 % by weight, 0.0001 to 3.0 % by weight, or 0.0001 to 2.0 % by weight, for example, 0.0001 to 1.0 % by weight, based on the total weight of the composition.

In the present disclosure, the metal corrosion inhibitor may be azoles, for example, triazoles, thiadiazoles, but is not limited thereto.

In the present disclosure, the triazoles may be selected from the group consisting of triazole derivatives, benzotriazole derivatives, and tolutriazole derivatives, but are not limited thereto.

In the present disclosure, the triazole-based metal corrosion inhibitor may be N,N-bis(2-ethylhexyl)-4-methyl-1H-benzotriazole-1-methylamine, N,N-bis(2-ethylhexyl)-5-methyl-1H-benzotriazole-1-methylamine, octyl 1H benzotriazole, di-tert-butylated 1H benzotriazole, 1H-1,2,3-triazole, 2H-1,2,3-triazole, 1H-1,2,4-triazole, 4H-1,2,4-triazole, 1-(1', 2'-di-carboxyethyl) benzotriazole, 2-(2'-hydroxy-5'-methyl phenyl) benzotriazole, 1H-1,2,3-triazole, 2H-1,2,3-triazole, 1H-1,2,4-triazole, 4H-1,2,4-triazole, benzotriazole, tolyltriazole, carboxybenzotriazole, 3-amino-1,2,4-triazole, chlorobenzotriazole, nitrobenzotriazole, aminobenzotriazole, cyclohexano[1, 2-d]triazole, 4,5,6,7-tetrahydroxytolyltriazole, 1-hydroxybenzotriazole, ethyl benzotriazole, naphthotriazole, 1-[N,N-bis(2-ethylhexyl)aminomethyl]benzotriazole, 1-[N,N-bis(2-ethylhexyl) aminomethyl]tolyltriazole, 1-[N,N-bis(2-ethylhexyl) aminomethyl]carboxybenzotriazole, 1-[N,N-bis(di-(ethanol)-aminomethyl]benzotriazole, 1-[N,N-bis(di-(ethanol)-aminomethyl]tolyltriazole, 1-[N,N-bis(di-(ethanol)-aminomethyl]carboxybenzotriazole, 1-[N,N-bis(2-hydroxypropyl) aminomethyl]carboxybenzotriazole, 1-[N,N-bis(1-butyl) aminomethyl]carboxybenzotriazole, 1-[N,N-bis(1-octyl) aminomethyl]carboxybenzotriazole, 1-(2', 3'-di-hydroxy propyl) benzotriazole, 1-(2', 3'-di-carboxyethyl) benzotriazole, 2-(2'-hydroxy-3',5'-di-tert-butyl phenyl) benzotriazole, 2-(2'-hydroxy-3',5'-di-tert-amyl phenyl) benzotriazole, 2-(2'-hydroxy-4'-octylphenyl) benzotriazole, 2-(2'-hydroxy-5'-tert-butyl phenyl) benzotriazole, 1-hydroxybenzotriazole-6-carboxylic acid, 1,2,4-triazol-3-ol, 3-amino-5-phenyl-1,2,4-triazole, 3-amino-5-heptyl-1,2,4-triazole, 3-amino-5-(4-isopropylphenyl)-1,2,4-triazole, 5-amino-3-mercapto-1,2,4-triazole, 3-amino-5-(p.tert-butyl phenyl)-1,2,4-triazole,5-amino-1,2,4-triazole-3-carboxylic acid, 1,2,4-triazole-3-carboxyamide, 4-aminourazole, 1,2,4-triazol-5-one, but is not limited thereto.

In the present disclosure, the thiadiazoles may include, but are not limited to, 2,5-dimercapto 1,3,4 thiadiazole, thiadiazole, 2-mercapto-5-hydrocarbyl thio-1,3,5-thiadiazole, 2-mercaptor-5-hydrocarbyl dithio-1,3,4-thiadiazole, 2,5-bis(hydrocarbylthio)-1,3,4-thiadiazole, and 2,5-(bis)hydrocarbyldithio-1,3,4-thiadiazole.

In the present disclosure, the antifreeze composition may be use for internal combustion engines, electric batteries, or fuel cells, for example, fuel cells.

In the present disclosure, the antifreeze composition may have an electric conductivity of 50.0 uS/cm or less, for example, an electric conductivity less than 50.0 uS/cm. An electric conductivity higher than the reference value lowers the performance of the fuel cell stack and increases a risk of dysfunction.

## Advantageous Effects of Invention

The present disclosure pertains to a colorant for heat transfer fluids and a composition comprising same. The colorant has excellent color intensity, is physically and chemically stable, and very well dissolves in antifreeze compositions based on glycol, especially, ethylene glycol. Accordingly, the antifreeze composition of the present disclosure has excellent color intensity, is physically and chemically stable, and possesses low electric conductivity, thus exhibiting excellent characteristics for use as an antifreeze for fuel cells.

## Brief Description of Drawings

FIG. 1a is a nuclear magnetic resonance (NMR) spectrum accounting for the structure of a colorant according to Example 1 of the present disclosure.
FIG. 1b shows ultraviolet-visible absorption spectra accounting for the structure of a colorant according to Example 1 of the present disclosure.
FIG. 2a is a nuclear magnetic resonance (NMR) spectrum accounting for the structure of a colorant according to Example 2 of the present disclosure.
FIG. 2b shows ultraviolet-visible absorption spectra accounting for the structure of a colorant according to Example 2 of the present disclosure.
FIG. 3a shows UV-Vis absorption spectra of a colorant according to Example 1 of the present disclosure.
FIG. 3b is a plot showing the molar absorption coefficient of the colorant according to Example 1 of the present disclosure.
FIG. 3c shows UV-Vis absorption spectra of a colorant according to Example 2 of the present disclosure.
FIG. 3d is a graph showing the molar absorption coefficient of a colorant according to Example 2 of the present disclosure.
FIG. 3e shows UV-Vis absorption spectra of a colorant according to Comparative Example 1.
FIG. 3f is a graph showing the molar absorption coefficient of a colorant according to Comparative Example 1 of the present disclosure.
FIG. 3g shows UV-Vis absorption spectra of a colorant according to Comparative Example 2.
FIG. 3his a graph showing the molar absorption coefficient of a colorant according to Comparative Example 2 of the present disclosure.

## Best Mode for Carrying out the Invention

Provided is an antifreeze composition comprising: 0.001 to 10.000 % by weight of a colorant having the structure of Chemical Formula 1 or 2; 30 to 70 % by weight of a glycol compound; and 30 to 70 % by weight of water.

## Mode for Carrying out the Invention

A better understanding of the present disclosure may be obtained through the following examples, which are set forth to illustrate, but are not to be construed to limit the present disclosure.

### PREPARATION EXAMPLE 1. Preparation of Colorant of Example 1

First, a phthalonitrile immediate having a triethylene as a substituent was synthesized. In brief, 4-nitrophthalonitrile (1 eq) and triethylene glycol monomethylether (1.1 eq) were dissolved in tetrahydrofuran (THF) and stirred in a nitrogen atmosphere. Then, $Cs_2CO_3$ (5.5 eq) was added, followed by heating 65°C for 12 hours. Subsequently, the mixture was spontaneously cooled to room temperature and added with 100 ml of water. Extraction was carried out with dichloromethane (DCM). Thereafter, the organic layer was separated using a separating funnel and washed three times with water, followed by drying over $MgSO_4$. Then, the dichloromethane was removed at room temperature using a rotary evaporator to obtain the synthesized 4-triethylene phthalonitrile intermediate.

Subsequently, the synthesized phthalonitrile intermediate was used for synthesizing a gallium-containing pigment. In brief, 4-triethylene phthalonitrile (4 eq) and $GaCl_3$ (1.5 eq) were put in a pressure tube and a solution of 1,8-diazabicyclo[5.4.0]undec-7-ene (DBU) (1.5 eq) in n-hexanol was added before heating 180°C for 4 hours. The reaction mixture was cooled to room temperature and the supernatant n-hexanol was removed with care. Hexane was added to the remaining reaction mixture and removed again as a supernatant. Afterwards, the reaction mixture was dissolved in DCM, washed once with 10% HCl and then three times with water using a separating funnel, and dried over $MgSO_4$.

DCM was removed using a rotary evaporator. Then, a small amount of DCM was added to the mixture, followed by dropwise adding the solution to diehthylehter which was being stirred to afford a gallium-bearing pigment as a crystal.

Next, the synthesized gallium-bearing pigment was substituted at the axis with a polyethylene glycol to prepare a colorant according to Example 1. In brief, the synthesized gallium-bearing pigment (1eq) and polyethylene glycol monomethylether (molecular weight 400 (i.e., $PEG_{0.4K}$), 10 eq) were dissolved dry dimethylsulfoxide (DMSO) and stirred in a nitrogen atmosphere. The reaction mixture was added with $K_2CO_3$ (8 eq), stirred at 150°C for 12 hours and cooled to room temperature. DCM was added before three rounds of washing with water using a separating funnel. Water was removed with $MgSO_4$ and DCM was removed using a rotary evaporator. Then, a small amount of DCM was added to the mixture which was then dropwise added to diethylether while stirring, to afford as a crystal the colorant having the structure of the following Chemical Formula 2-4 according to Example 1 of the present disclosure.

[Chemical Formula 2-4]

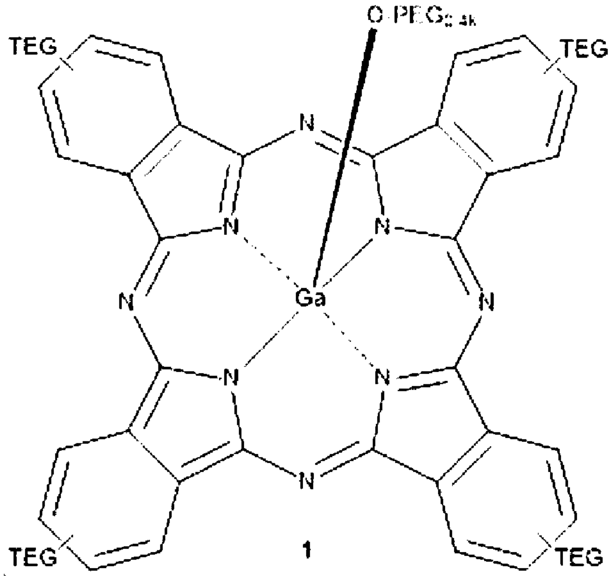

1

**PREPARATION EXAMPLE 2. Preparation of Colorant of Example 2**

A colorant according to Example 2 was prepared in the same manner as in Example 1 with the exception of using a pigment bearing silicon instead of gallium. In brief, dry polyethylene glycol monomethyl ether (Mw 400, 3 eq) was put, together with a silicon-bearing pigment (1 eq), to a pressure tube to which dry toluene was then poured. A solution of NaOH (2.5 eq) in n-hexanol was added, followed by stirring in a nitrogen atmosphere. Then, the reaction mixture was cooled to room temperature, dissolved in DCM, and washed four times with water using a separating funnel. Water was removed with $MgSO_4$ and DCM was removed using a rotary evaporator. A small amount of DCM was added to the reaction mixture which was then added to hexane while stirring, to afford as a crystal a colorant having the structure of the following Chemical Formula 2-5 according to Example 2 of the present disclosure.

[Chemical Formula 2-5]

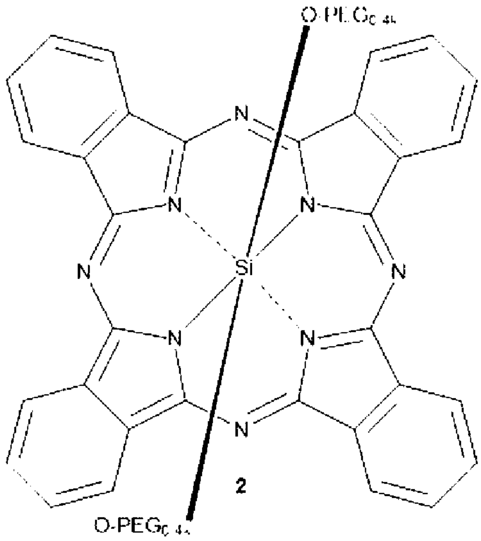

2

**PREPARATION EXAMPLE 3. Preparation of Colorant of Example 3**

A boron-bearing pigment was synthesized using a phthalonitrile intermediate. In brief, $BCl_3$ (1 eq, 1M solution in p-xylenes) was added at room temperature to 4-triethylene phthalonitrile (1 eq) in a flask in a nitrogen atmosphere and heated at 150°C for 1 hour. After being cooled to room temperature, the reaction mixture was subjected to extraction with DCM. The extract thus obtained was washed three times with water and dried over $MgSO_4$. DCM was removed using a rotary evaporator. Subsequently, a small amount of DCM was added again, and the resulting solution was dropwise added to diethylether while stirring, to afford a boron-bearing pigment as a crystal.

Then, a polyethylene glycol was introduced into the axis of the gallium-bearing pigment to prepare a colorant having the structure of Chemical Formula 1 according to the present disclosure. In brief, the synthesized gallium-bearing pigment (1eq) and polyethylene glycol monomethylether (Mw 400 (i.e., $PEG_{0.4K}$), 1.5 eq) were dissolved in dry o-dichlorobenzene (o-DCB)) and stirred at 140°C for 10 hours in a nitrogen atmosphere. The reaction mixture was cooled to room temperature, added with DCM, and then washed three times with water using a separating funnel. Then, water was removed with $MgSO_4$ and DCM was removed using a rotary evaporator. Afterwards, a small amount of DCM was added to the reaction mixture which was then dropwise added to diethylether while stirring, to afford as a crystal a colorant having the structure of the following Chemical Formula 1-2.

[Chemical Formula 1-2]

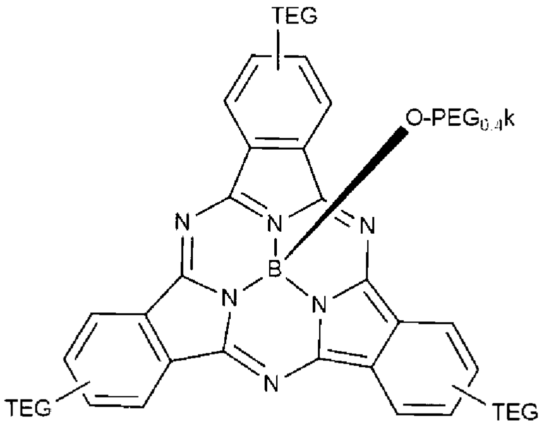

**EXPERIMENTAL EXAMPLE 1. Structural Identification**

**Experimental Example 1-1. Nuclear Magnetic Resonance (NMR) Analysis**

Measurement was made in $CDCl_3$ using an NMR spectrometer (Varian-500 MHz). The results are depicted in

FIGS. 1a and 2a.

For the colorant of Example 1, as shown in FIG. 1a, aromatic hydrogen peaks appeared between 7.0 and 8.0 ppm and many aliphatic hydrogen peaks were detected at 3.0 to 4.2 ppm due to the molecular axial substitution of PEG. This spectral data thus indicate that the axial substitution of PEG successfully occurred.

As can be seen in FIG. 2a, peaks at 7.5 to 8.0 and 8.3 to 9.7 ppm were accounted for by unsubstituted aromatic hydrogens of the colorant of Example 2. In addition, many aliphatic hydrogen peaks were detected at 3.0 to 4.0 ppm due to the molecular axial substitution of PEG in the colorant. This data indicate that the axial substitution of PEG successfully occurred.

**Experimental Example 1-2. Ultraviolet-Visible Absorption Spectroscopy**

UV-VIS absorption spectra were measured using UV-1800 spectrophotometer (Shimadzu). The results are depicted in FIGS. 1b and 2b.

As shown in FIG. 1b, the colorant prepared according to Example 1 appeared blue green.

The absorbance data of FIG. 2b indicate the appearance of blue color in the colorant prepared according to Example 2.

**EXPERIMENTAL EXAMPLE 2. Chromatic Characterization**

To identify chromaticity, the colorants of Examples 1 and 2 were each added at the same concentration to an antifreeze composition composed mainly of ethylene glycol, with compounds of the following Chemical Formulas 3-1 to 3-5 used for comparison (hereinafter referred to Comparative Examples 1 to 5), and the solutions were measured for absorbance using a UV-Vis spectrophotometer. The results are depicted in FIGS. 3a to 3g and summarized in Table 1.

[Equation]

$$A=\varepsilon lc$$

A: absorbance, $\varepsilon$: molar absorption coefficient, c: molar concentration

Chromaticity was graded into: ◎ (excellent) for absorbance coefficiency >100,000; ∘ (very good) for absorbance coefficiency > 50,000; △ (good) for absorbance coefficiency > 20,000; and × (poor) for absorbance coefficiency less than 20,000.

[Chemical Formula 3-1]

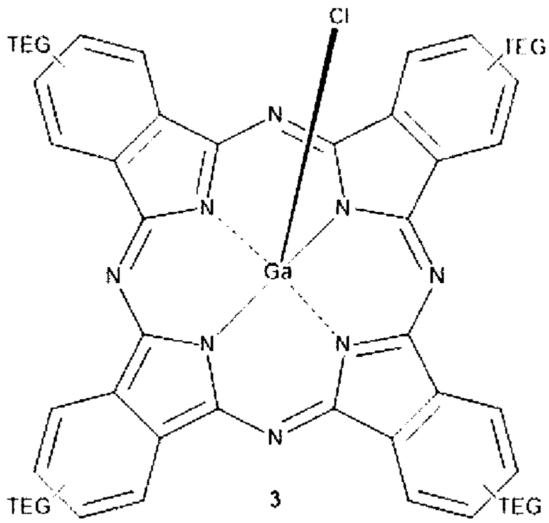

3

[Chemical Formula 3-2]

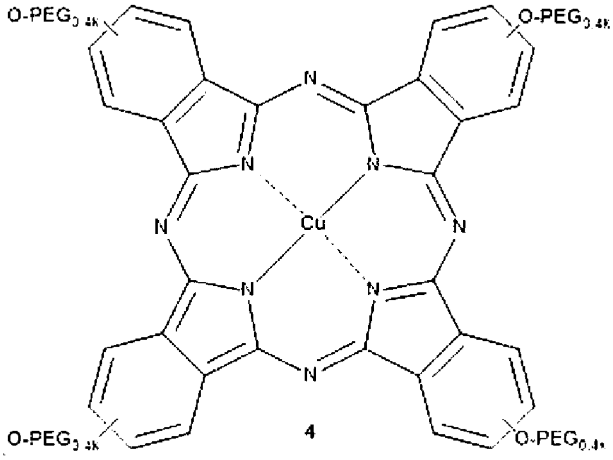

4

[Chemical Formula 3-3]

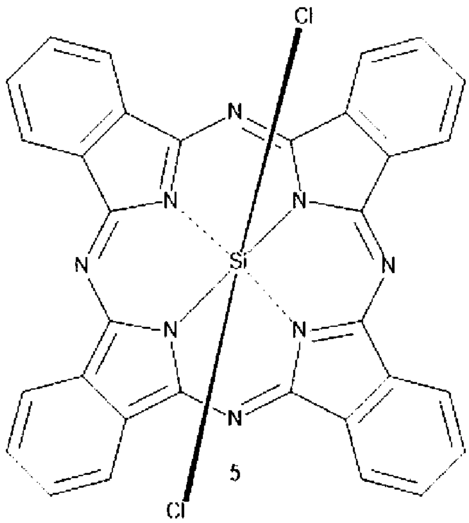

5

[Chemical Formula 3-4]

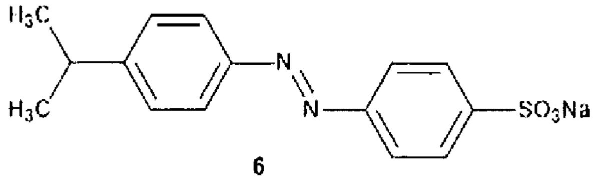

6

[Chemical Formula 3-5]

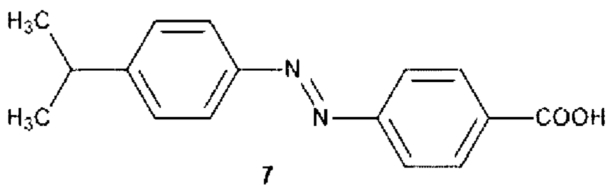

7

TABLE 1

| Sample | Absorbance Coeffi. (M-1cm-) | Chromaticity | Color |
|---|---|---|---|
| Ex. 1 | 58,588 | ◦ | Blue green |
| Ex. 2 | 102,457 | ◎ | Blue |
| C. Ex. 1 | 21,234 | △ | Blue green |
| C. Ex. 2 | 9,032 | X | Blue green |
| C. Ex. 3 | <1,000 | X | Blue |
| C. Ex. 4 | <3,000 | X | Red yellow |
| C. Ex. 5 | <3,000 | X | Red |

As seen the data of FIGS. 3a to 3h and Table 1, the color was blue green for Example 1, blue for Example 2, blue green for Comparative Examples 1 and 2, blue for Comparative Example 3, and red yellow for Comparative Example 4, and red for Comparative Example 5.

In addition, turning to absorbance, the absorbance coefficient was measured to be 58,588 L mol-1cm-1 for Example 1 and 102,457 L mol-1cm-1 for Example 2, accounting for excellent and very good chromaticity of Examples 1 and 2, respectively.

In contrast, the absorbance coefficient was 21,234 L mol-1cm-1 for Comparative Example 1 and 9,032 L mol-1cm-1 for Comparative Example 2. Comparative Examples 3 to 5 were measured to have absorbance coefficients of 1,000, 3,000, and less than 3,000, respectively, which are all at poor levels.

The colorants of Examples 1 and 2 in which hydrophilic polymer substituents are introduced into the molecular axis thereof according to the present disclosure exhibited remarkably higher chromaticity, compared to Comparative Example 3 in which a polymer substituent was neither introduced into the peripheral part, nor into the core.

Compared to Comparative Example 2 in which a polymer substituent was introduced only into the peripheral part, Examples 1 and 2 were measured to have about 6.52- and about 11.39-fold greater absorbance coefficients, respectively.

In addition, the absorbance coefficient was about 2.77-fold higher in Example 1 and about 4.84-fold higher in Example 2, compared to Comparative Example 1, which had no a polymer substituent at the molecular axis thereof.

Therefore, the colorants of Examples 1 and 2 according to the present disclosure were found to exhibit excellent chromaticity in an antifreeze composition composed mainly of ethylene glycol, compared to those of Comparative Examples 1 to 5. Particularly, it was found that a colorant having a polymer substituent at the molecular axis thereof exhibits remarkably high chromaticity, compared to a colorant having a polymer substituent at the peripheral part thereof. Hence, the colorants according to the present disclosure were identified to have excellent color intensity and find applications in antifreeze compositions.

## EXPERIMENTAL EXAMPLE 3. Assay for Physicochemical Stability

Thermal gravity analysis was made using TA Q600 instrument at a temperature elevation rate of 10°C per min to 300°C in a nitrogen atmosphere. An assay was measured for acid/alkali stability. In this regard, the compounds were monitored with the naked eye for degradation in solutions having a pH of 2 to 12 and measured for change in absorbance region and for absorbance intensity by UV-Vis spectroscopy.

Stability was graded into: ◎ for excellent acid/alkali stability and a weight change rate of 10% or less at 250°C or higher as measured by thermal gravity analysis; ◦ for excellent acid/alkali stability and a weight change rate of about 20% at 250°C as measured by thermal gravity analysis; △ for excellent acid/alkali stability and a weight change rate of about 30% at 150°C as measured by thermal gravity analysis; and X for conditions other than the foregoing conditions. The results are summarized in Table 2, below.

TABLE 2

| Sample | Physical and Chemical Stability |
|---|---|
| Example 1 | ◎ |
| Example 2 | ◎ |

It was understood from the data of Table 2 that Examples 1 and 2 were highly superb in terms of thermal stability as their weight change rates were 3.4% and 8.8%, respectively, at measured by thermal gravity analysis. Particularly, Examples 1 and 2 were both thermally stability at up to about 300°C and degraded at higher than the temperature. In addition, excellent stability to acid and alkali was detected. That is to say, Examples 1 and 2 were thermally and chemically very stable.

**EXPERIMENTAL EXAMPLE 4. Assay for Solubility**

Solubility was measured as follows: 0.1 g of a compound was added to and completely dissolved in 1 L of an antifreeze at room temperature; the compound was additionally added in an amount of 0.4 g; after complete dissolution was detected, the compound was further added in an amount of 0.5 g; and the solubility was observed with the naked eye. The solubility was graded into: ◎ for a solubility of 1.0 g/L or higher in a commercial antifreeze composition composed mainly of ethylene glycol; ◦ for a solubility of 0.5 g/L or higher; △ for a solubility of 0.1 g/L or higher; and X for a solubility less than 0.1 g/L. The results are summarized in Table 3, below.

TABLE 3

| Sample | Solubility |
|---|---|
| Example 1 | ◎ |
| Example 2 | ◎ |

As shown in Table 3, Examples 1 and 2 exhibited excellent dissolution because their solubilities were 1.1 g/L and 1.2 g/L, respectively, in an antifreeze composition composed mainly of ethylene glycol. That is, Examples 1 and 2 were well dissolved in an antifreeze, compared to conventional other pigments. Therefore, the colorants of the present disclosure can express colors stably and uniformly in antifreeze compositions due to their excellent solubility in the antifreeze compositions.

**EXAMPLE 5. Assay for Electric Insulation**

Antifreeze compositions containing compounds (about 0.001mM) were measured for electric conductivity using TCX-90$^3$ instrument. Electric insulation was graded into: ◎ for an electric conductivity of 3.0 uS/cm in the antifreeze composition; ◦ for an electric conductivity of 3.0 to 10.0 uS/cm; △ for an electric conductivity of 10.0 to 20.0 uS/cm; and X for an electric conductivity higher than 20.0 uS/cm. The results are summarized in Table 4, below.

TABLE 4

| Sample | Electric Insulation |
|---|---|
| Colorant 1 | ◎ |
| Colorant 2 | ◎ |

As shown in Table 4, the antifreeze compositions containing Examples 1 and 2 were both very low in electric conductivity for their electric conductivity measured to be 3 uS/cm or less. That is, an antifreeze composition containing the colorant of the present disclosure has excellent electric insulation.

**EXPERIMENTAL EXAMPLE 6. Assay for Ion Exchange Resin Pollution**

Ion exchange resin pollution refers to a degree to which an ion exchange resin for removing ions released from fuel cell stacks and radiators and responsible for continual increase of electric conductivity is polluted with the antifreeze composition. To measure ion exchange resin pollution, an antifreeze composition containing a compound (ca. 0.001 mM) was allowed to pass through an ion exchange resin and conductivity and absorbance were compared between the solution before and after passage. Anti-ion exchange resin pollution was determined to be good for 99% or higher coincidence in conductivity and absorbance intensity between the compositions before and after passage and to be poor for the other conditions. The results are summarized in Table 5, below.

TABLE 5

| Sample | Anti-ion exchange resin pollution |
|---|---|
| Example 1 | Good |
| Example 2 | Good |

As shown in Table 5, Examples 1 and 2 were observed to make no pollution in the ion exchange resin.

## Industrial Applicability

The present disclosure pertains to a colorant for heat transfer fluids and a composition comprising same

## Claims

1. An antifreeze composition, comprising: 0.001 to 10.000 % by weight of a colorant having the structure of Chemical Formula 1 or 2; 30 to 70 % by weight of a glycol compound; and 30 to 70 % by weight of water:

[Chemical Formula 1]

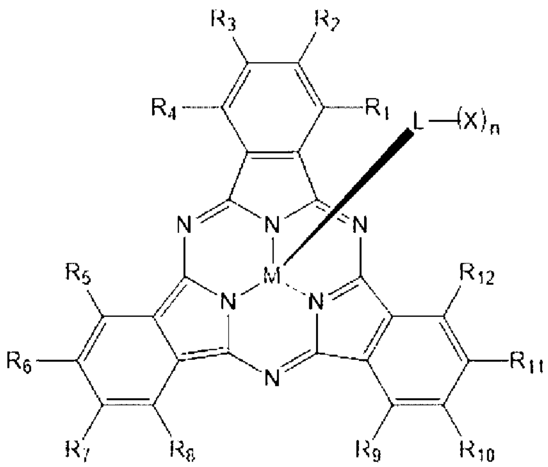

[Chemical Formula 2]

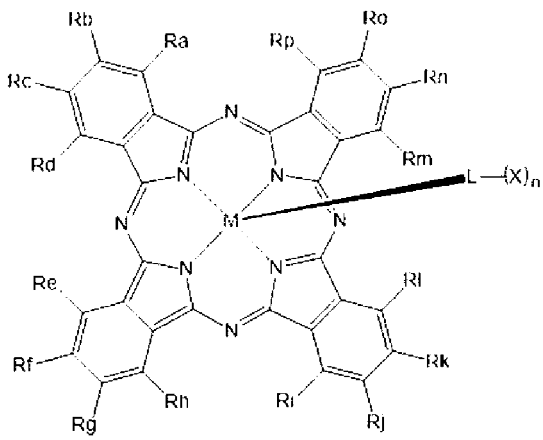

wherein,

M is a metal or a metalloid,
L is $-(CH_2)m-$, -COO-, -CO-, -MH-, $-SO_2-$, or $-SO_2NH-$,
X is a hydrophilic polymer, and

$R_1$ to $R_{12}$ and $R_a$ to $R_p$ are each independently a hydrogen atom, a halogen atom, a, carboxy group, a sulfonic acid group, an amide group, an ester group, an acetyl group, a siloxane group, an alkyl group of $C_1$ to $C_{10}$, an alkylene group of $C_1$ to $C_{10}$, an alkoxy group of $C_1$ to $C_{10}$, an oxyalkylene group of $C_1$ to $C_{10}$, a fluoroalkyl group of $C_1$ to $C_{10}$, an arylalkyl group of $C_4$ to $C_{20}$, or a derivative thereof.

**2.** The antifreeze composition of claim 1, wherein M in Chemical Formula 1 is boron (B), silicon (Si), aluminum (Al), gallium (Ga), indium (In), or titanium (Ti).

**3.** The antifreeze composition of claim 1, wherein M in Chemical Formula is silicon (Si), aluminum (Al), gallium (Ga), indium (In), titanium (Ti), tin (Sn), or ruthenium (Ru).

**4.** The antifreeze composition of claim 1, wherein the hydrophilic polymer is poly(ethylene glycol), poly(vinyl alcohol), poly(vinyl pyrrolidone), or copolymers of two or more thereof.

**5.** The antifreeze composition of claim 1, wherein the hydrophilic polymer has a number average molecular weight of 150 to 20,000.

**6.** The antifreeze composition of claim 1, wherein the colorant has a solubility of 1 g/L or higher in the antifreeze composition.

**7.** The antifreeze composition of claim 1, wherein the colorant has a weight loss of 10% or less at a temperature of 250°C or less.

**8.** The antifreeze composition of claim 1, wherein the glycol compound is at least one selected from the group consisting of ethylene glycol, diethylene glycol, triethylene glycol, propylene glycol, dipropylene glycol, butylene glycol, polyalkylene glycol, and glycol ether.

**9.** The antifreeze composition of claim 1, further comprising an antifoaming agent in an amount of 0.005 to 0.100 % by weight, based on the total weight of the antifreeze composition.

**10.** The antifreeze composition of claim 1, further comprising a pH adjuster in an amount of 0.0005 to 0.1 % by weight, based on the total weight of the antifreeze composition.

**11.** The antifreeze composition of claim 10, wherein the pH adjuster is an amine-based compound.

**12.** The antifreeze composition of claim 11, wherein the amine-based compound is at least one selected from the group consisting of alkanol amine, alkyl amine, and a cyclic amine.

**13.** The antifreeze composition of claim 11, wherein the amine-based compound is triethanolamine.

**14.** The antifreeze composition of claim 1, further comprising a metal corrosion inhibitor.

**15.** The antifreeze composition of claim 14, wherein the metal corrosion inhibitor is an azole-based compound.

**16.** The antifreeze composition of claim 1, wherein the antifreeze composition is used for internal combustion engines, electric batteries, or fuel cells.

**17.** The antifreeze composition of claim 1, wherein the antifreeze composition has an electric conductivity of 50.0 uS/cm or less.

【Fig 1a】

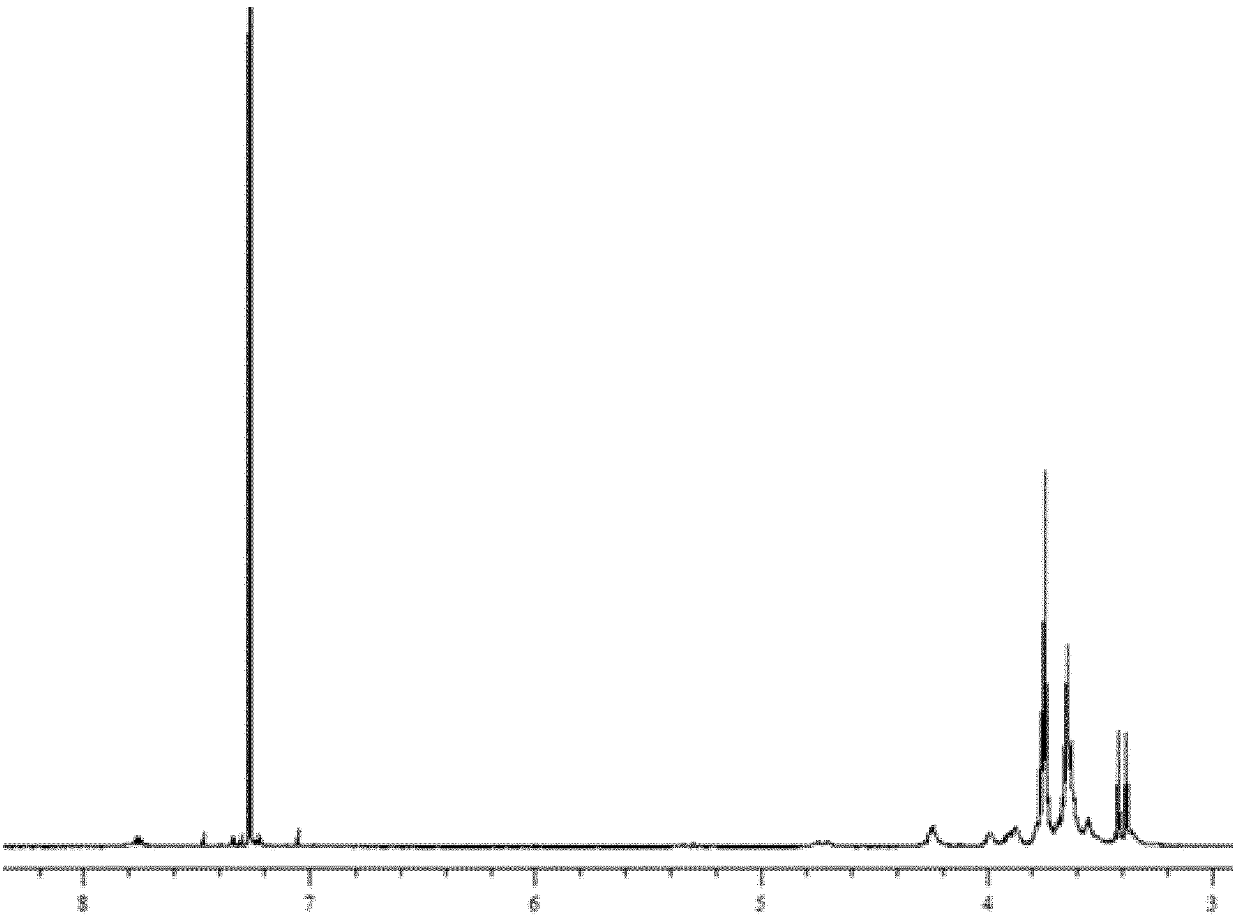

【Fig 1b】

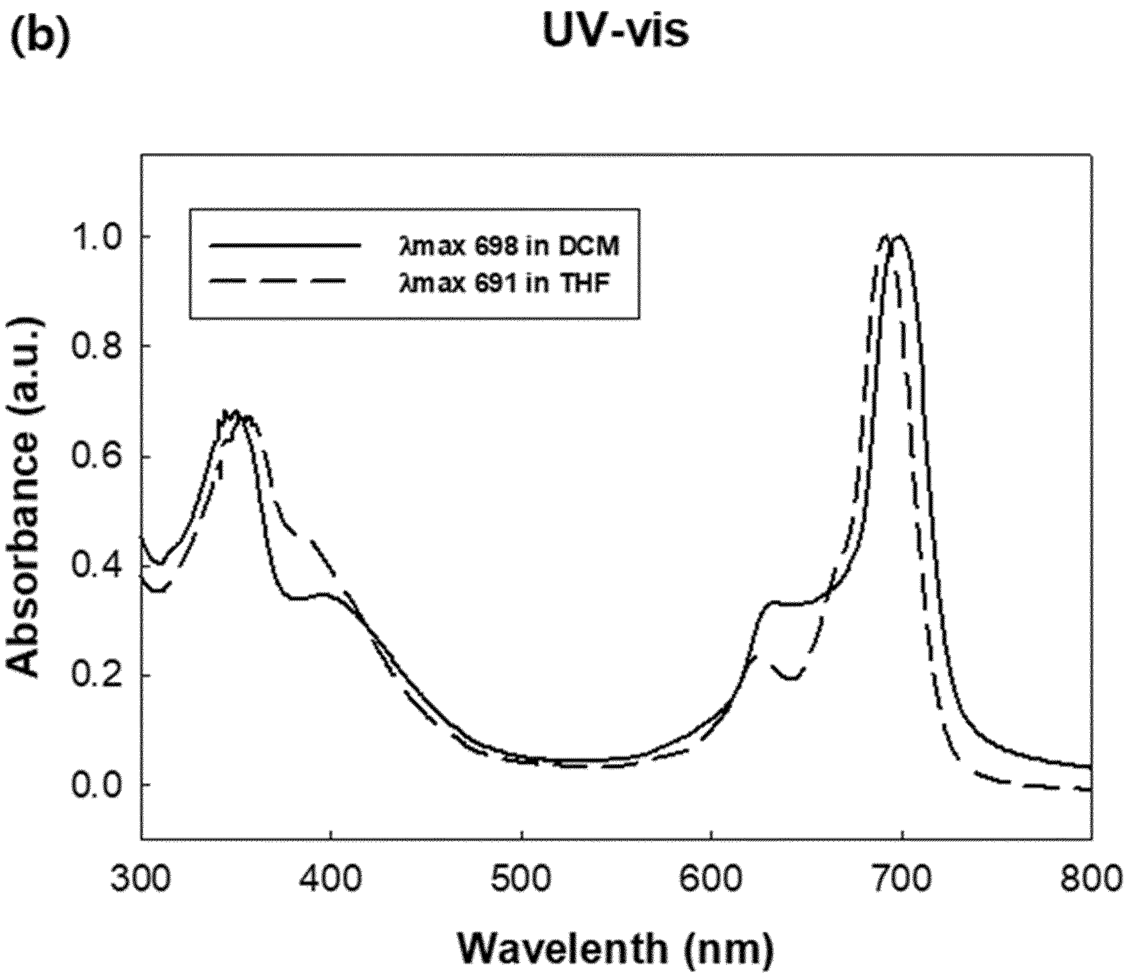
(b)
UV-vis
λmax 698 in DCM
λmax 691 in THF
Absorbance (a.u.)
1.0
0.8
0.6
0.4
0.2
0.0
300
400
500
600
700
800
Wavelenth (nm)

【Fig 2a】

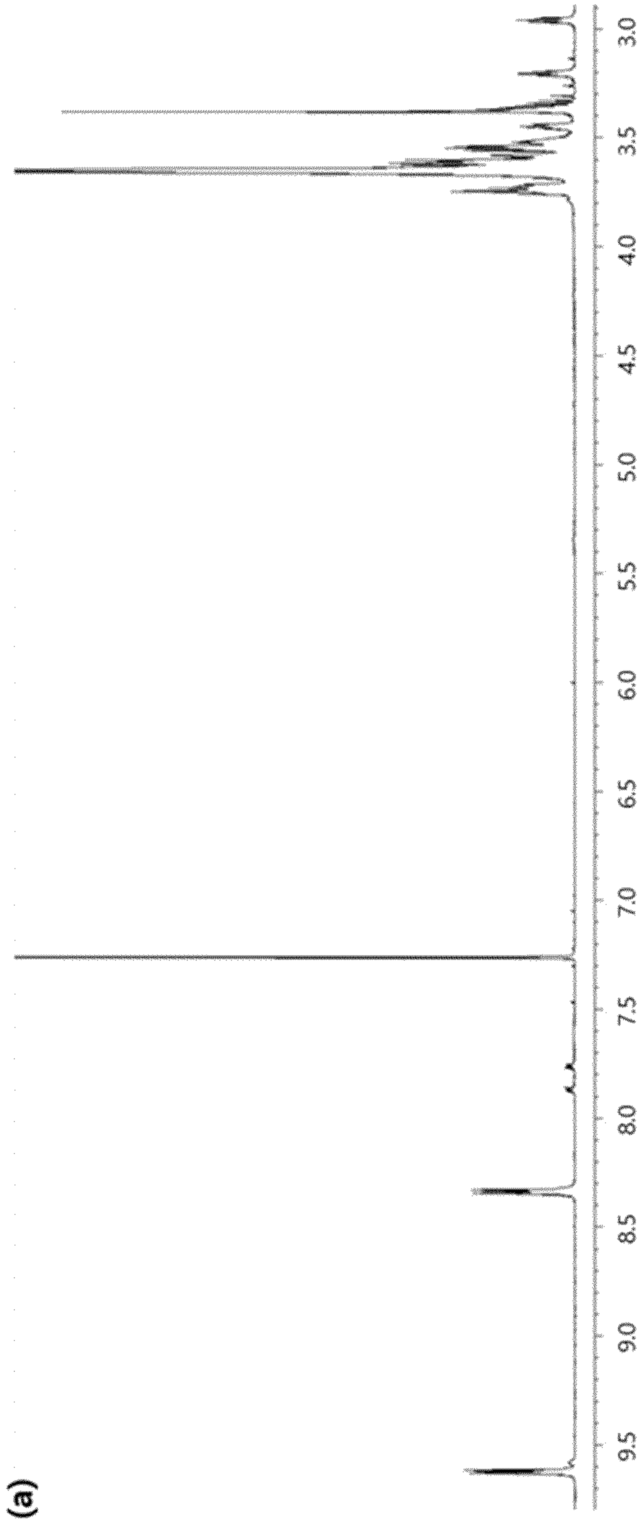


3

【Fig 2b】

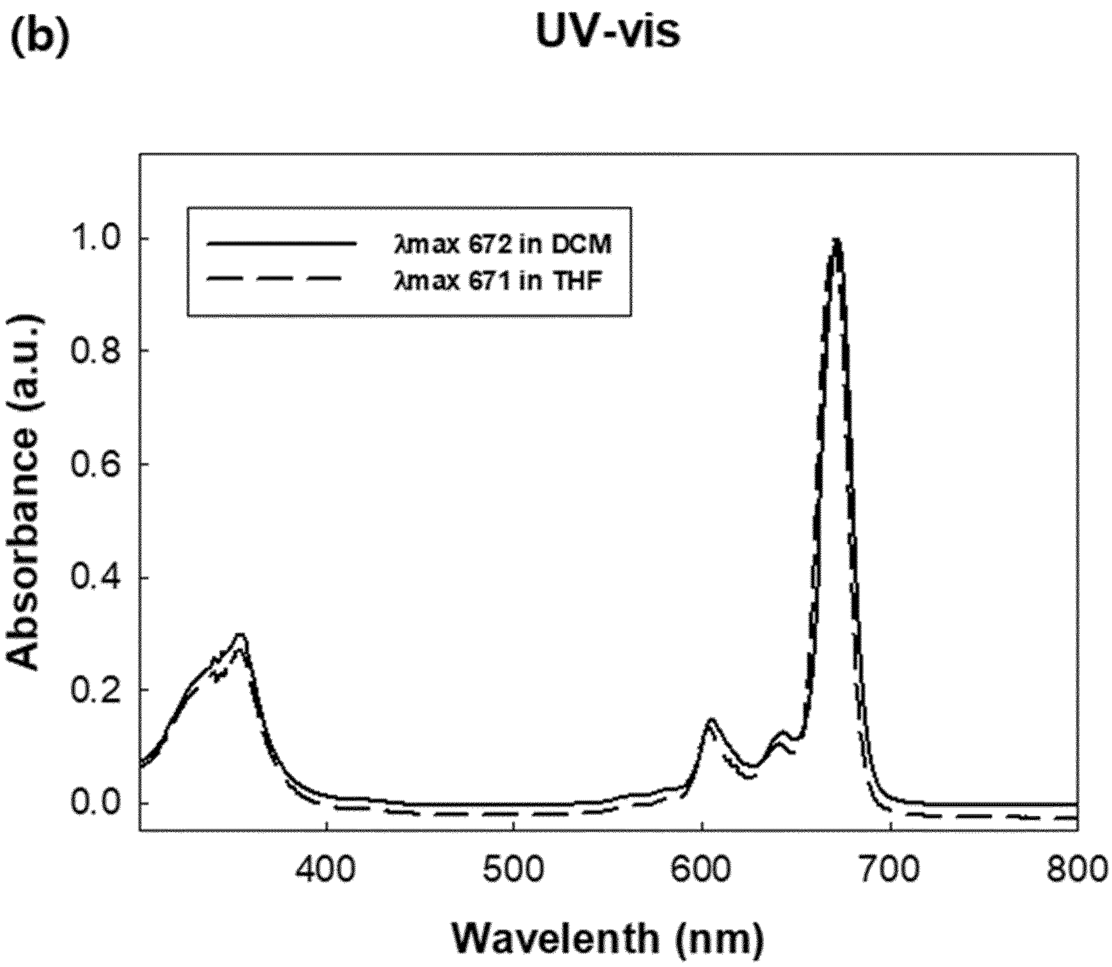
(b)
UV-vis
λmax 672 in DCM
λmax 671 in THF
Absorbance (a.u.)
1.0
0.8
0.6
0.4
0.2
0.0
400
500
600
700
800
Wavelenth (nm)

【Fig 3a】

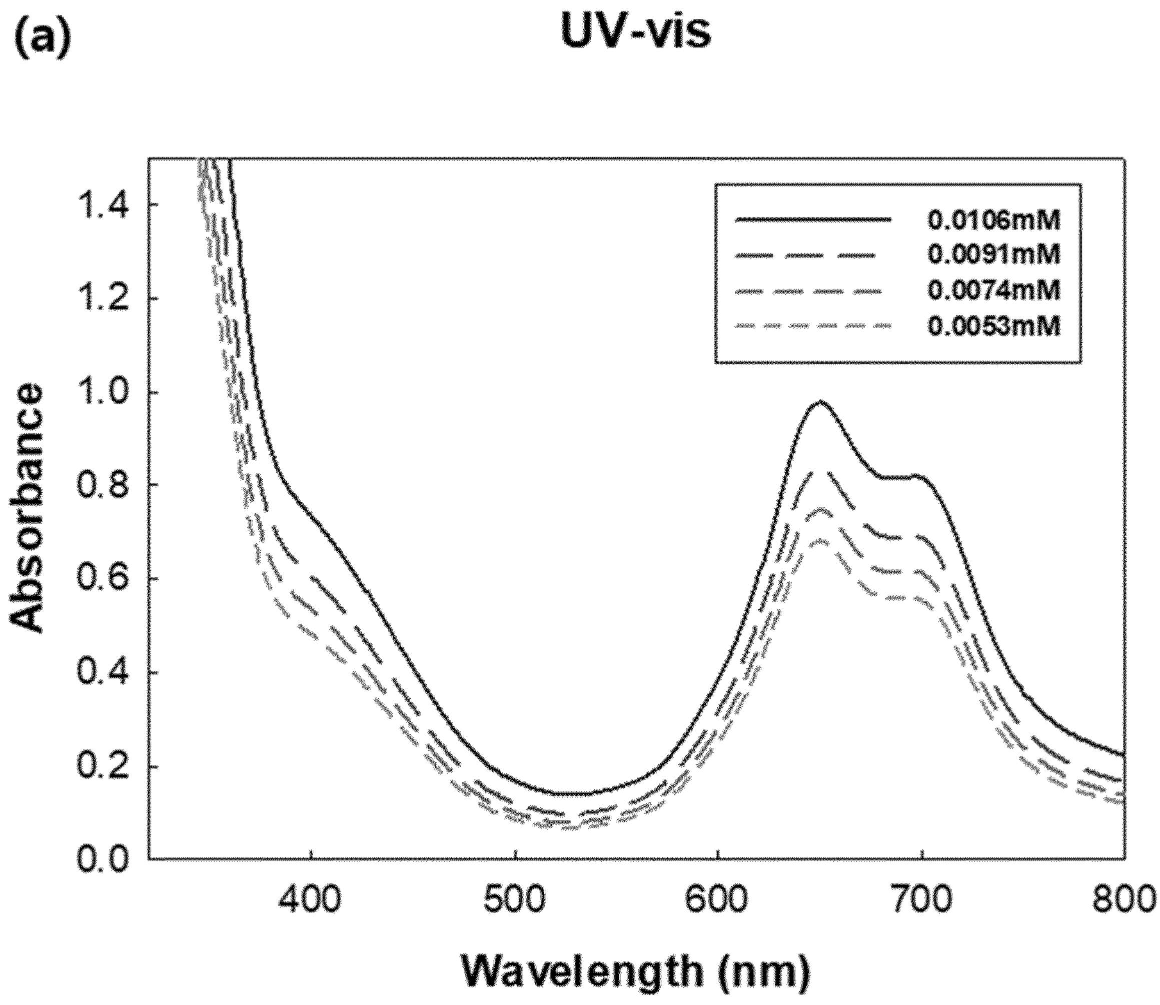
(a)
UV-vis
0.0106mM
0.0091mM
0.0074mM
0.0053mM
Absorbance
0.0
0.2
0.4
0.6
0.8
1.0
1.2
1.4
400
500
600
700
800
Wavelength (nm)

【Fig 3b】

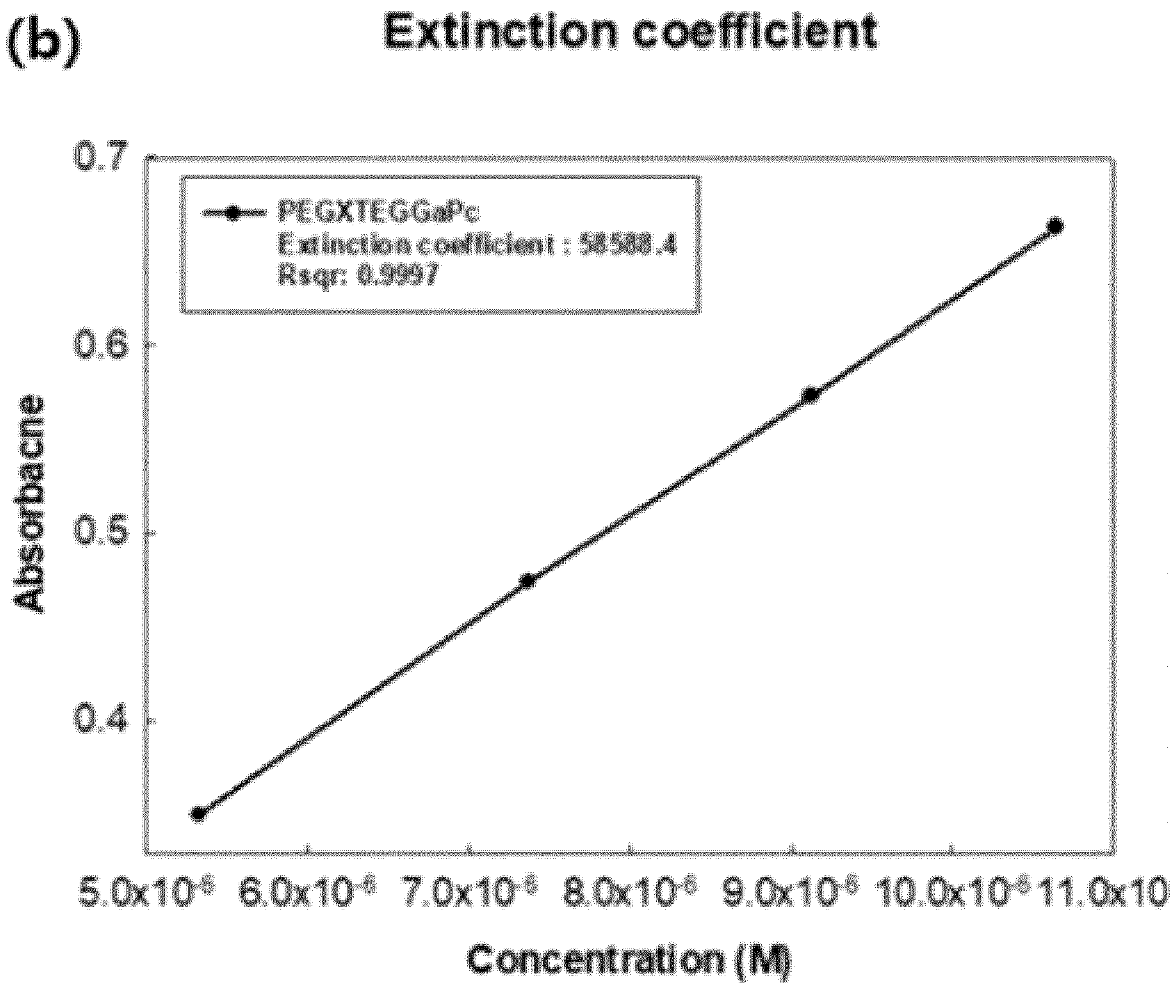
(b)
Extinction coefficient
PEGXTEGGaPc
Extinction coefficient : 58588.4
Rsqr: 0.9997
Absorbacne
0.7
0.6
0.5
0.4
5.0x10-6
6.0x10-6
7.0x10-6
8.0x10-6
9.0x10-6
10.0x10-6
11.0x10
Concentration (M)

【Fig 3c】

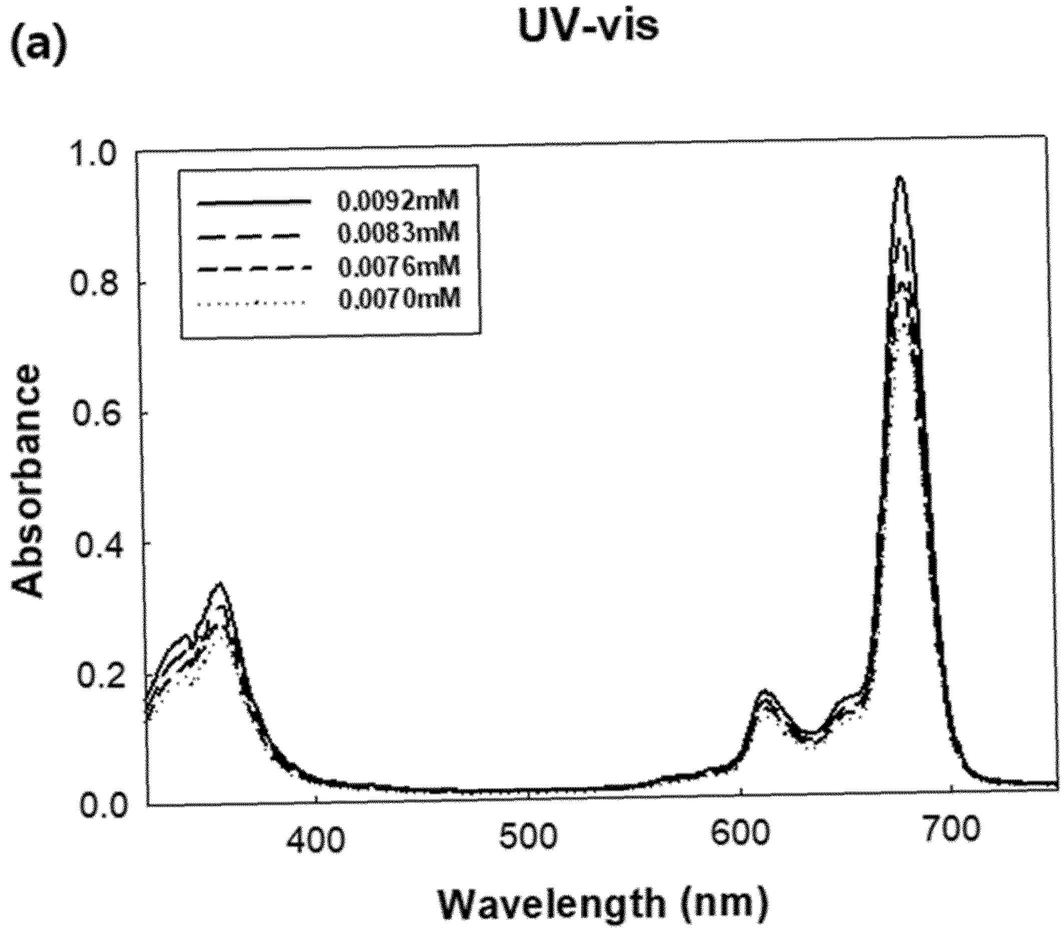
(a)
UV-vis
0.0092mM
0.0083mM
0.0076mM
0.0070mM
Absorbance
Wavelength (nm)
0.0
0.2
0.4
0.6
0.8
1.0
400
500
600
700

【Fig 3d】

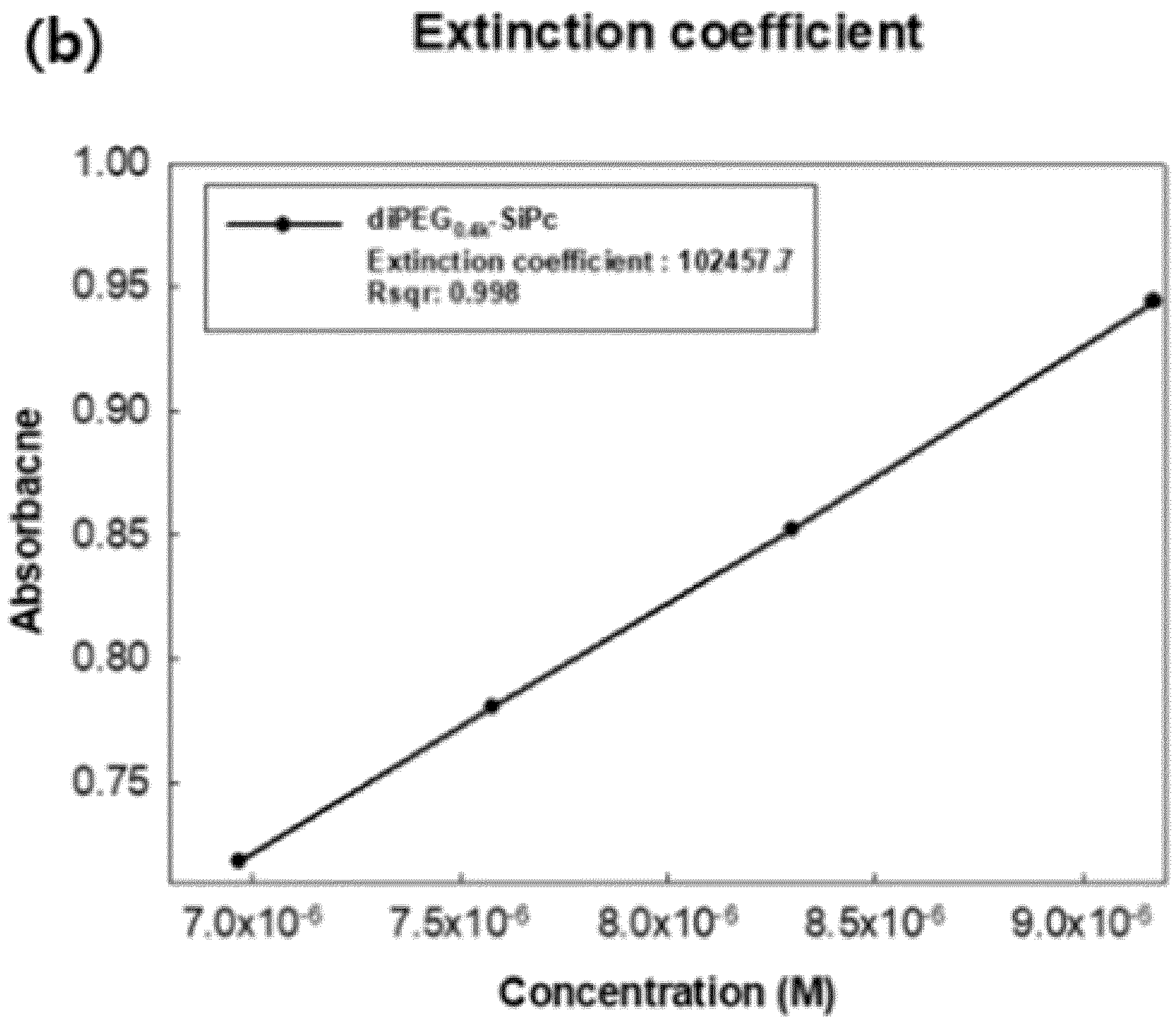
(b)
Extinction coefficient
diPEG-SiPc
Extinction coefficient : 102457.7
Rsqr: 0.998
1.00
0.95
0.90
0.85
0.80
0.75
Absorbacne
7.0x10-6
7.5x10-6
8.0x10-6
8.5x10-6
9.0x10-6
Concentration (M)

【Fig 3e】

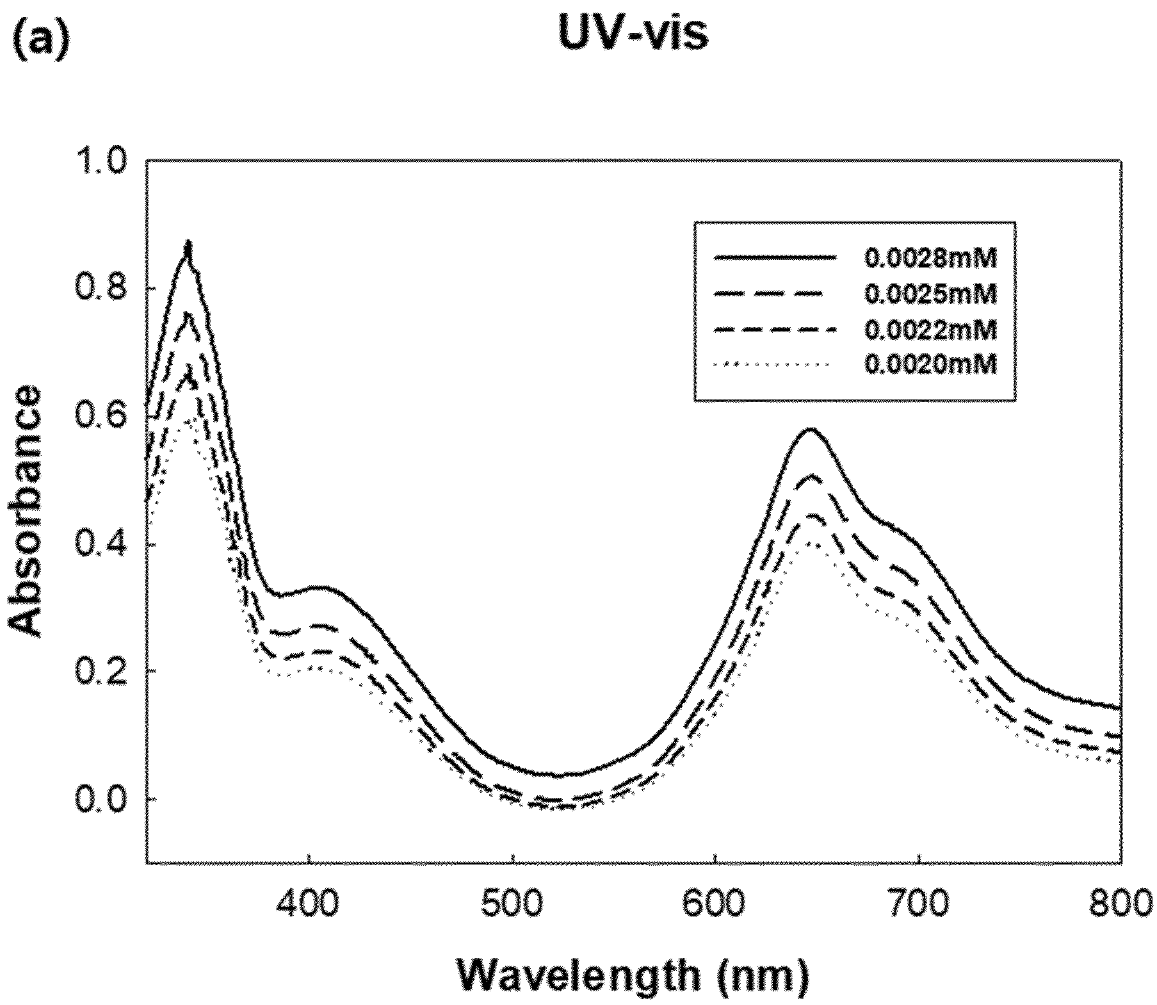
(a)
UV-vis
Absorbance
Wavelength (nm)
0.0028mM
0.0025mM
0.0022mM
0.0020mM
1.0
0.8
0.6
0.4
0.2
0.0
400
500
600
700
800

【Fig 3f】

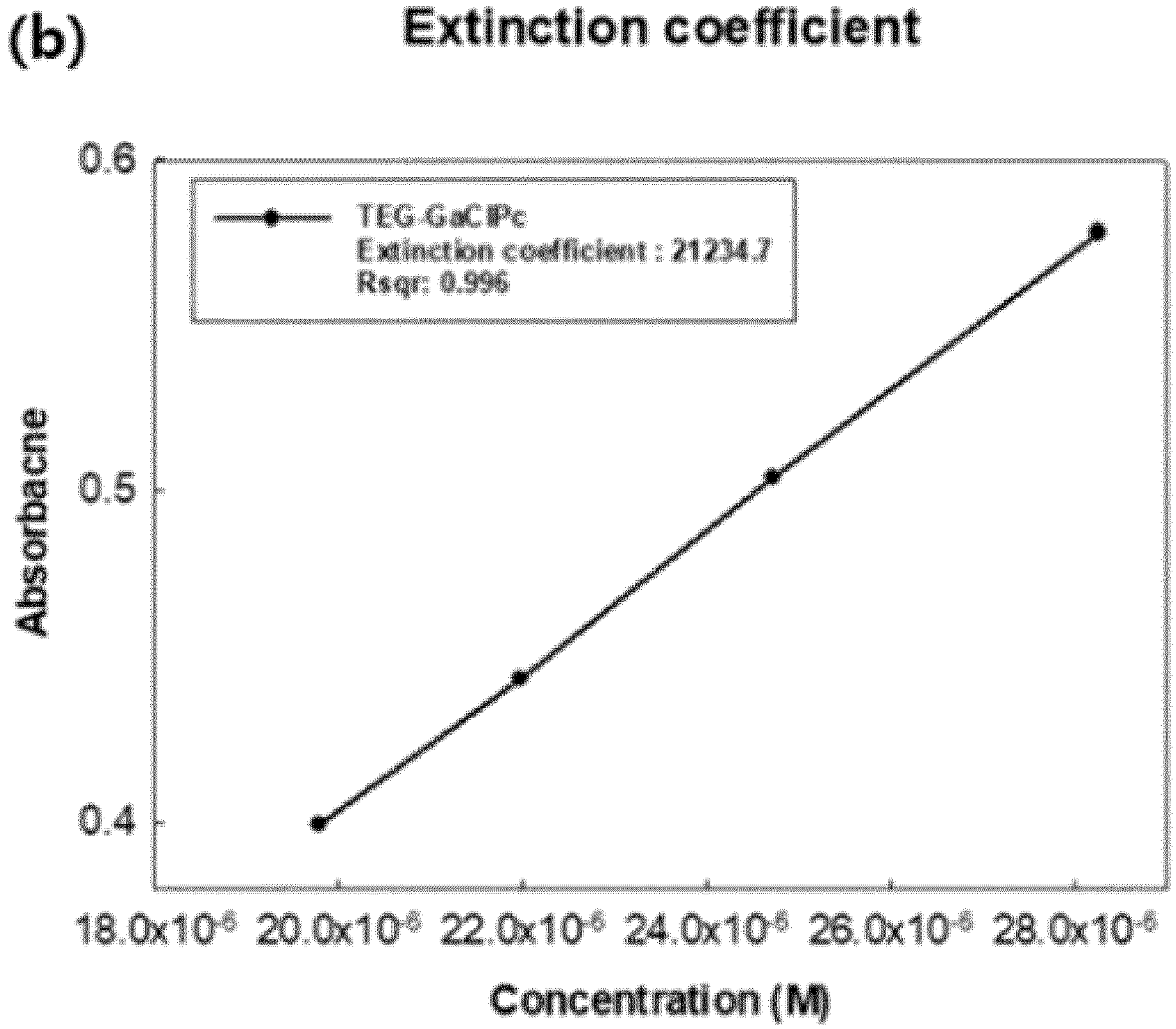
(b)
Extinction coefficient
TEG-GaClPc
Extinction coefficient : 21234.7
Rsqr: 0.996
Absorbacne
0.6
0.5
0.4
18.0x10-6
20.0x10-6
22.0x10-6
24.0x10-6
26.0x10-6
28.0x10-6
Concentration (M)

【Fig 3g】

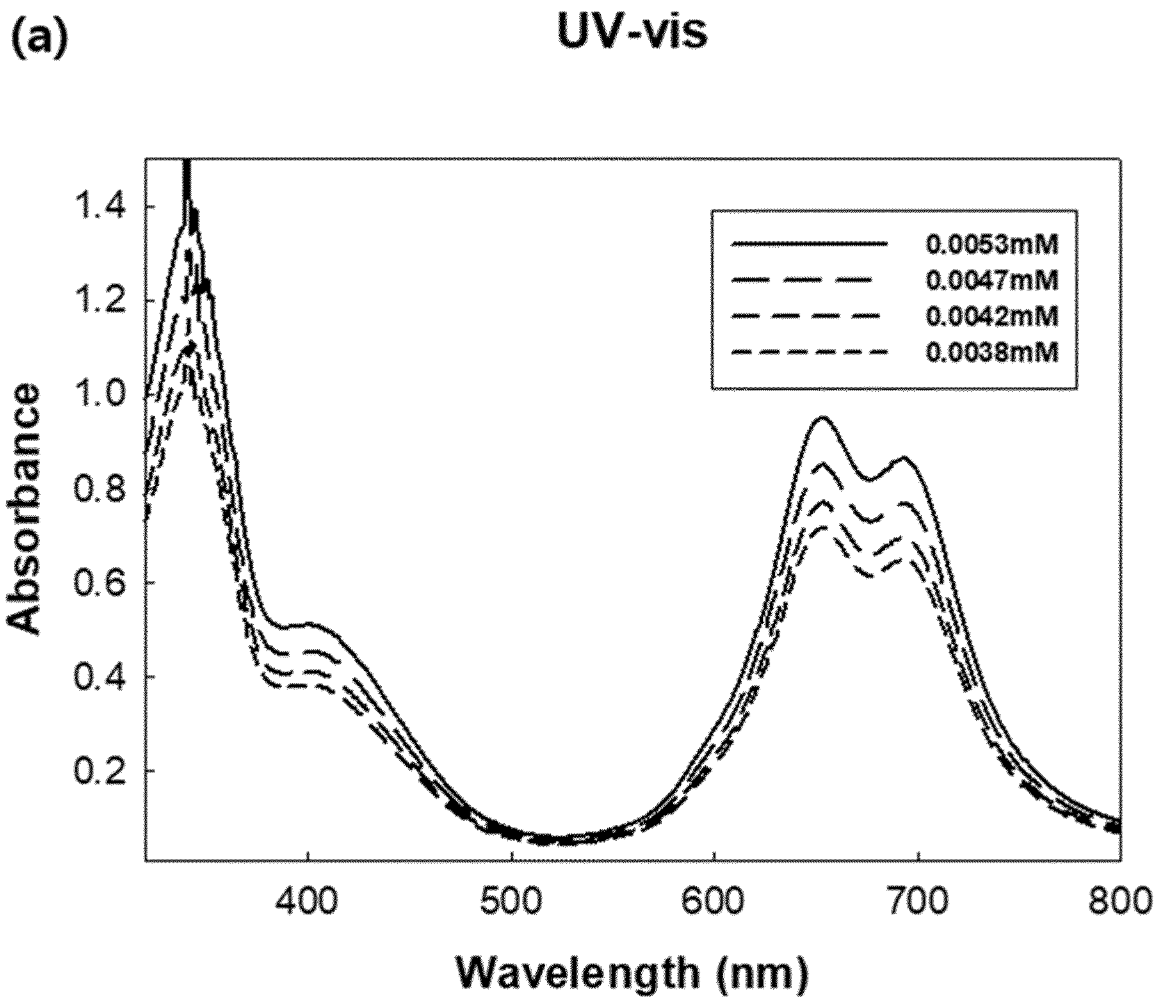
(a)
UV-vis
Absorbance
1.4
1.2
1.0
0.8
0.6
0.4
0.2
400
500
600
700
800
Wavelength (nm)
0.0053mM
0.0047mM
0.0042mM
0.0038mM

【Fig 3h】

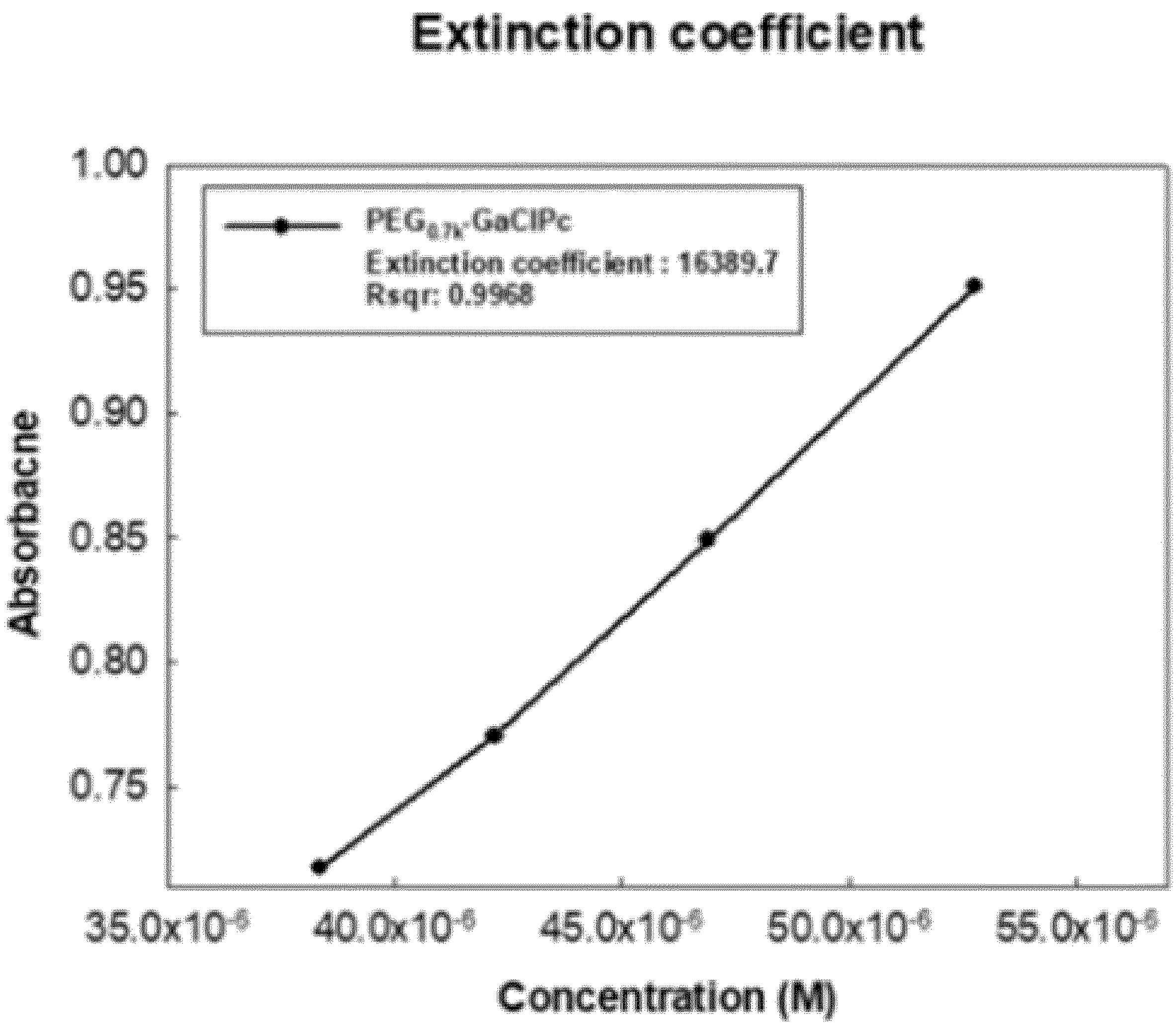
Extinction coefficient
PEG0.7k-GaClPc
Extinction coefficient : 16389.7
Rsqr: 0.9968
Absorbacne
1.00
0.95
0.90
0.85
0.80
0.75
35.0x10-6
40.0x10-6
45.0x10-6
50.0x10-6
55.0x10-6
Concentration (M)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190139760